# EUROPEAN PATENT APPLICATION

(11) **EP 4 737 529 A1**
(43) Date of publication of application: **06.05.2026**
(21) Application number: 24210879.3
(22) Date of filing: 05.11.2024
(51) Int. Cl.: C09J 7/38, C09J 9/02, C09J 133/08, C09J 5/00

(54) **ADHESIVE COMPOSITION, ADHESIVE TAPE AND THE USE THEREOF, AND METHOD FOR ELECTRICALLY MODIFYING THE ADHESIVE STRENGTH OF THE ADHESIVE TAPE**

(71) Applicant: TESA SE, 22848 Norderstedt (DE)
(72) Inventor: HASAN, Nazmul, Norderstedt (DE)
(74) Representative: tesa SE

(57) **Abstract**

The present invention provides an adhesive composition and an adhesive tape which allow bonding strength recovery and possess excellent reworking function, allowing to use it multiple times without significantly losing its adhesive properties. Furthermore, the invention relates to a method for modifying the adhesive strength of the adhesive tape on demand by controlling the rate of electrochemical stimuli or different DC voltages at different time scales and polarities; and to a use of the adhesive tape for bonding, electroadhesion, rebonding, and debonding in a wide range of applications.

## Description

### TECHNICAL FIELD

The present invention relates to an adhesive composition, to an adhesive tape comprising the adhesive composition, to a method for modifying the adhesive strength of the adhesive tape, and to a use of the adhesive tape for bonding, electroadhesion, rebonding, and debonding in a wide range of applications.

### BACKGROUND ART

Debondable pressure-sensitive adhesive tapes are known. WO 2023/165966 A1 describes a pressure-sensitive adhesive composition comprising at least one base component selected from the group consisting of a polyacrylate pressure-sensitive adhesive and a synthetic rubber pressure-sensitive adhesive, a salt component and a (polymer) electrolyte component which is detached by applying an electrical DC voltage; as well as a pressure-sensitive adhesive tape comprising at least one electrically conductive backing material and at least one layer of the pressure-sensitive adhesive composition. The adhesive tape bonds to conductive substrates upon application of pressure and is debonded when a direct current (DC) voltage is applied and preferably when it is heated simultaneously. However, such pressure-sensitive adhesive tapes suffer from weak initial bonding, for example the pressure-sensitive adhesive tape described in WO 2023/165966 A1 (at 0 V, room temperature) was reported to have an initial peel adhesion of 4.8 N/cm. Such low adhesive strength limits the practical application of such adhesive tapes in applications where higher adhesive strength is required.

One of the possible solutions for increasing the adhesive strength of adhesive tapes is to go in the direction of structural adhesive tapes, of which the structural bond may be activated by heating or UV systems.

WO 2024/079548 A1 describes a semi-structural or structural adhesive composition that can be debonded upon application of a direct current electric voltage across the adhesive composition. However, after application of a direct current electric voltage of 50 V across the adhesive composition for 3 min, only a reduction in adhesive strength of between 50 % and 69 % could be achieved.

WO 2021/115772 A1 describes curable and debondable two-part (2K) adhesive composition comprising: i) a first part comprising: (meth)acrylate monomer; co-polymerizable acid; and an electrolyte; and, ii) a second part comprising: a first curing agent for the monomers of said first part; a second curing agent for the monomers of said first part; and, a solubilizer. However, such an adhesive composition comprises co-polymerizable acid which may result in gas revolution, thereby decreasing the initial adhesion properties of the adhesive composition and thus limiting its reworking function. On top of that, the high weight percentage of co-polymerizable acid components in the adhesive may raise concerns about conductive substrate corrosion under various weather conditions.

Other than the disadvantages mentioned above, there are further issues with structural adhesive tapes. For instance, activation by heating may not be viable for heat-sensitive systems, e.g., electric batteries, as a higher temperature between 100 °C and 200 °C is typically needed to initiate and complete the structural bonding process. In some heat activated adhesives, water vapor is produced as a byproduct, which may result in porous bonding structures.

Alternatively, UV-activated structural bonding adhesive tapes may provide sufficient adhesive strength. However, there are several disadvantages that come with UV-activated structural bonding adhesive tapes. For instance, UV-C is mostly used to activate the adhesive and the adhesive needs to be cured over several hours or days or even weeks. UV-C is also harmful to the human body. In addition, the electrical debonding of structural bonding adhesive has not been very successful so far. Furthermore, debonding of the structural adhesive tape may compromise its reusability. In particular, structural bonding adhesive tapes do not have reworking function. In other words, once the adhesive tapes are debonded from a substrate, they can no longer be used again.

EP 3858932 A1 describes a separation method for an adherend comprising a first voltage application step in order to allow for debonding of the electrolyte-containing adhesive layer from an adherend, a bonding maintenance step of recovering the adhesive force, a second voltage application step, and a separation step of separating the electrolyte-containing adhesive layer and the adherend. However, the peel adhesion for such an adhesive before and after voltage application and recovery within one hour was reported to be in the range of 6 to 8 N/20 mm, which is still low for various applications. Besides that, the adhesive composition described therein contains a commercially available ionic polymer (e.g., SOMAREX 530: anionic polyacrylamide polymer).

### TECHNICAL PROBLEM

In view of the above, there remains a challenge to provide a suitable adhesive composition and adhesive tape that possess sufficient initial adhesive strength, whose bond strength can be increased on demand without applying external pressure, can be debonded efficiently from substrates without leaving adhesive traces and can be rebonded to substrates, reworked and re-used multiple times without significantly compromising adhesive strength. In addition, it takes a long time for conventional electrically debondable tapes to recover their initial bond strength after debonding. Accordingly, there is a need for an adhesive composition or tape that, after debonding, quickly recovers its initial bond strength.

### SUMMARY OF INVENTION

It is therefore an object of the present invention, proceeding from the prior art, at least partly to overcome the abovementioned disadvantages of the adhesives of the prior art. Specifically, it is an object of the present invention to provide an adhesive composition and adhesive tape which already has initial tackiness and better initial adhesive strength, for example a peel adhesion of more than 2.5 N/cm to 5 N/cm and along with other achievable bonding strength according to shear testing up to 1 MPa.

It is an object of the present invention, moreover, to provide an adhesive composition and an adhesive tape of which the adhesive strength can be increased to that similar to semi-structural bonding adhesive tapes within a short amount of time (for example within seconds or minutes).

Unlike the adhesives of the prior art, the adhesive strength of the adhesive composition and adhesive tape of the present invention can be increased by means of simple methods, i.e., control of electrochemical stimuli (e.g., application of DC voltage and resulting in movements of charged species within the adhesive), without resorting to certain special conditions such as the use of UV-C radiation, high heat, or high pressure. On top of that, the adhesive composition and adhesive tape have an electrically modifiable bonding strength, and as such can be easily bonded, debonded or rebonded on demand by controlling the rate of electrochemical stimuli or different DC voltages at different time scales and polarities. Furthermore, the adhesive composition and adhesive tape of the present invention allows bonding strength recovery. It is also an objective of the present invention to provide a way to use the adhesive composition and adhesive tape to achieve momentary bonding, e.g., applying an electric field to create immediate adhesion between surfaces, which can be reversed when the field is turned off, so-called electroadhesion.

As used herein, the term "bonding" refers to an increase in bonding strength of the adhesive, as measured by Test A (described below), when a voltage is applied, compared to its initial bonding strength value without voltage application. The term "debonding" refers to a reduction in the adhesive's bond strength from its initial value, making it easy to remove without leaving adhesive residue on the adherend surface. It also means reducing the bond strength, after it has been increased by voltage application (bonding), back to its original value or an even lower, to allow for easy removal. The term "rebonding" refers to a repetition of a step sequence including at least bonding-debonding-bonding, i.e. to a cyclization behavior. The expression "bonding strength recovery", "adhesive recovery" or "bond recovery" as used herein refers to the case that once the adhesive has debonded, it quickly recovers to reach its initial bonding strength (without applying voltage).

Furthermore, it is an object of the present invention to provide an adhesive composition and an adhesive tape which possess excellent reworking function, i.e., bonded, debonded and rebonded and thus can be used multiple times without significantly losing its adhesive properties. The adhesive composition and the adhesive tape can be debonded from at least one substrate without remnants upon application of electrochemical stimuli. Especially, the adhesive strength may be decreased by up to 70% to 90% from its initial adhesive strength in less than 60 seconds after the application of electrochemical stimuli. More surprisingly, the adhesive composition of the present invention can achieve an adhesive strength (peel adhesion on steel) of up to 12 N/cm from its initial bonding strength (e.g., of about 4 N/cm) by applying electric stimulus for 60s, which is about 200 times greater than the initial adhesive strength and also much higher than that of certain adhesive compositions disclosed in the prior art which have debonding functions.

The objects are achieved by means of an adhesive composition according to a first aspect of the present invention, prepared by polymerizing a mixture comprising at least the following components:
a) 35 to 70 wt % of acrylate monomer (a1) from the group of the (meth)acrylic esters containing at least one oxygen atom; and
b) 20 to 40 wt % of acrylate monomer (a2) from the group of the (meth)acrylic esters and/or amides containing at least one nitrogen atom; and
c) 0.1 wt % to 15 wt % of one or more electro-responsive compounds from the group of polymerizable zwitterionic monomers and/or non-polymerizable zwitterionic compounds, preferably one or more zwitterionic monomers; and
d) 0.005 to 10 wt % of at least one initiator; and
e) 0 wt % to 20 wt % of one or more ionic liquids; and
f) 0.1 wt % to 20 wt % of one or more conducting salts; and
g) optionally 1% to 20% by weight of one or more acrylate monomers (a3), wherein the one or more acrylate monomers (a3) are different from acrylate monomers (a1) and (a2); and
h) optionally additives,
wherein the weight fractions of the components are based on the total weight of the mixture. All weight ratios of components present in the mixture are chosen to add up to 100 wt %. However, if a solvent is present in the mixture for polymerization in the present invention, which forms the basis for the adhesive composition of the present invention, the solvent is disregarded when stating the weight fractions of the components.

In preferred embodiments, the adhesive composition or tape (described below) of the present invention is prepared in a two-step process (also described in further detail below), including: (i) the provision of a mixture, including UV syrup preparation and liquid electrolyte formulation, followed by (ii) polymerization, including curing by UV web polymerization or UV polymerization to obtain the adhesive composition or tape of the present invention.

In preferred embodiments, the adhesive composition of the present invention is preferably a pressure-sensitive adhesive (PSA) composition. In particularly preferred embodiments, the adhesive composition of the present invention is a pressure-sensitive adhesive polymer (random/statistical copolymer) electrolyte composition. The copolymer structure is prepared by polymerizing monomers (a1) and (a2) and therefore contains units derived from these monomers also containing both oxygen and nitrogen atoms. The ratio of the unit containing at least one oxygen atom and the unit containing at least one nitrogen atom corresponds to the weight ratio of monomer (a1) to monomer (a2) as defined in further detail below and which is adjusted to achieve several properties such as: (a) high polarity to dissolve enough conducting salts and electro-responsive compounds, preferably zwitterionic monomers, (b) controlling the glass transition temperature (T_{g}) of the copolymer, and (c) making the adhesive effectively debondable. The latter cause can be explained as follows.

Without wishing to be bound by theory, it is assumed that debonding occurs by reactive dissolution of the adhesive. This means that when the DC voltage is applied, the cation of the ionic liquid is expected to form an N-heterocyclic carbene or similar reactive species by abstracting a proton from the cations, specifically the cation of the ionic liquid containing a proton at the C2 position. This carbene species then modifies or reacts with the bonding side of the adhesive, facilitating debonding. A similar mechanism has been experimentally demonstrated for the solubilization of cellulose, proteins and polymers. It is also possible that debonding occurs by physical dissolution (no reaction) or similar processes. The latter is more likely if the C2 carbon of the cation of the ionic liquid does not have a proton. In this scenario, migration of the ionic liquid to the adhesive-adherend interface causes physical solubilization of the adhesive, resulting in debonding. Of course, both processes can occur during debonding along with another process as gas evaluation, most probably H₂ gas. The gas release makes the adhesive surface porous. But whatever the reasons for the debonding mechanism, the polymer structure needs sufficient polargroups (containing oxygen and nitrogen or similar) together with polar plasticizers such as water (as described below) or PEG or similar for better migration of the ionic liquid to the substrate-adhesive interface and facilitating effecting debonding.

According to further embodiments, the adhesive composition of the present invention contains one or more electro-responsive compounds from the group of polymerizable zwitterionic monomers or non-polymerizable zwitterionic compounds, preferably one or more zwitterionic monomers. The one or more electro-responsive compounds are ionic species having both cation and anion in their structure, which enable the adhesive tape comprising the adhesive composition of the present invention responsive to electric fields. More preferably, the electro-responsive compounds are zwitterionic compounds. In particular, zwitterionic compounds are molecules that contain both positive and negative charges but are overall neutral.

According to further embodiments, the adhesive composition of the present invention further contains conducting salts (e.g., different Na and Li salts), enabling the adhesive composition of the present invention to be ion conductive. The adhesive composition of the present invention may also contain an ionic liquid (IL), preferably a room temperature ionic liquid (RTIL), more preferably having a high electrochemical window and low ion conductivity. The conducting salt aids in the solubilization of electro-responsive compounds, preferably zwitterionic monomers, and contributes to the entire adhesive becoming more electro-responsive. It is worth to mention that electro-responsive properties of the adhesive do not come solely from the electro-responsive compounds. Rather, it is a combined property of the electro-responsive compounds, preferably the zwitterionic monomers, and the conducting salt. It was surprisingly found that the adhesive composition or tape containing a very low wt % of zwitterionic monomer also showed a bit of an increase in bonding strength under the application of a negative DC voltage on the electrically conductive adherend. However, other features such as initial bonding strength, rebonding, and bond recovery after debonding were then highly compromised. Therefore, to obtain all features (bonding, rebonding, and bond recovery after debonding), a proper balance of zwitterionic monomers and conducting salts is important. On the other hand, the debonding feature in the adhesive composition or tape is due to the ionic liquid in the presence of a certain amount of plasticizers.

In preferred embodiments, the initial peel adhesion as measured with test A described hereinafter (cf. experimental section) before the application of a DC voltage source ranges from 2.5 N/cm to 5 N/cm. After voltage application, the peel adhesion increases to 8 N/cm to 11.5 N/cm.

According to preferred embodiments, the adhesive composition of the present invention is a pressure-sensitive adhesive composition. Preferably, the adhesive composition is configured to have an electrically modifiable adhesive bonding strength, for example, bonding, debonding, and rebonding, according to the methods described below.

A second aspect of the present invention is an adhesive tape comprising at least layers as follows:
(a) a first layer D of adhesive, the layer D of adhesive containing the adhesive composition of the first aspect, wherein the adhesive composition contains one or more ionic liquids, i.e. more than 0 wt % and up to 20 wt % ionic liquid; and
(b) optionally a carrier layer T, preferably wherein the carrier layer T is electrically conductive; and
(c) optionally a second layer C of adhesive, the layer C of adhesive containing the adhesive composition of the first aspect, wherein the adhesive composition contains no ionic liquid, i.e. 0 wt % ionic liquid.

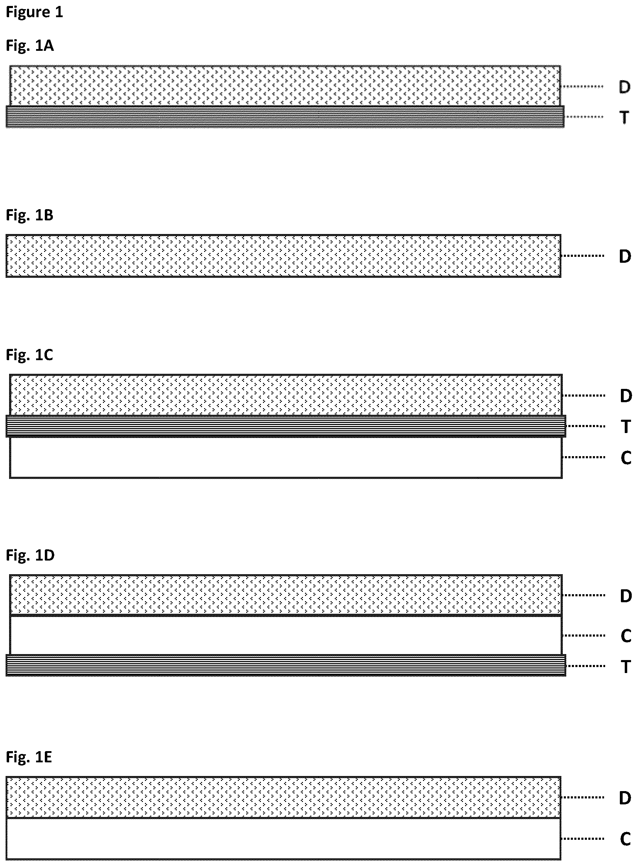

In certain preferred embodiments, the adhesive tape of the present invention comprises the layer D of adhesive and a carrier layer T (also referred to as backing hereinafter), preferably without the presence of a second layer C of adhesive (see Fig. 1A). Preferably, the adhesive tape of the present invention is a single-sided, single-layered adhesive tape as shown in Fig. 1A.

In the present disclosure, the term "single-layered" refers to the presence of only one layer of adhesive on its own, i.e. as a free-standing tape consisting of only one layer, or, when used in the context of a tape comprising a carrier layer T, the term "single-layered" refers to the presence of only one layer of adhesive on a face of the carrier layer T. That said, the term "single-layered" is distinguished from the term "multi-layered", which refers to the presence of two or more layers of adhesive on its own or on a face of the carrier layer T. Furthermore, the terms "single-sided" and "double-sided" always indicate the presence of a carrier layer T. In detail, for single-sided adhesive tapes, there is always a carrier layer (i.e., carrier layer T) where the carrier layer is present on one side of the adhesive layer. For double-sided adhesive tapes, the carrier layer (i.e., carrier layer T) may be disposed between a plurality of layers of the adhesive. For transfer adhesive tapes, there is no carrier layer (i.e., no carrier layer T).

In certain preferred embodiments, the adhesive tape of the present invention comprises the layer D of adhesive, preferably without the presence of a layer C of adhesive (see Fig. 1B). Preferably, the adhesive tape of the present invention is a single-layered adhesive transfer tape as shown in Fig. 1B. More preferably, the adhesive transfer tape is optically clear. The expressions "optically clear" or "optical clarity" according to the present disclosure refer to an adhesive tape that does not absorb any specific wavelength of light in the visible spectrum (400 to 700 nm), resulting in a transparent and a colorless appearance.

In certain preferred embodiments, the adhesive tape of the present invention comprises both the layer D of adhesive and the layer C of adhesive, as well as the carrier layer T, preferably wherein the carrier layer T is disposed between the layer D of adhesive and layer C of adhesive (see Fig. 1C). Preferably, the adhesive tape of the present invention is a double-sided, single-layered adhesive tape as shown in Fig. 1C. In another preferred embodiment of the present invention, the adhesive tape of the present invention may be a double-sided, single-layered adhesive tape comprising two layers C of adhesive with the carrier layer T being disposed between the two layers C of adhesive. Alternatively, the adhesive tape of the present invention may also be a double-sided, multi-layered adhesive tape.

In certain preferred embodiments, the adhesive tape of the present invention comprises both the layer D of adhesive and the layer C of adhesive, as well as the carrier layer T, wherein the layer D of adhesive is disposed on one of the faces of the layer C of adhesive and the layer T is disposed on the other face of layer C of adhesive. Preferably the carrier layer T may be disposed at least on one of the faces of the second layer C of adhesive, and preferably wherein the first layer D of adhesive is directly disposed on the face of the second layer C of adhesive that is opposite the carrier layer T, thereby obtaining a layer order T-C-D (see Fig. 1D). Alternatively, layer T may be disposed at least on one of the faces of the layer D of adhesive, and layer C of adhesive is directly disposed on the face of layer D of adhesive that is opposite carrier layer T, thereby obtaining a layer order T-D-C (not shown). Preferably, the adhesive tape of the present invention is a single-sided, multi-layered adhesive tape as shown in Fig. 1D.

In certain preferred embodiments, the adhesive tape of the present invention comprises both the layer D of adhesive and the layer C of adhesive, but without the carrier layer T (see Fig. 1E). Preferably, the adhesive tape of the present invention is a multi-layered adhesive transfer tape as shown in Fig. 1E. More preferably, the adhesive transfer tape is optically clear.

Preferably, the adhesive tape of the present invention comprising the layer D of adhesive is configured to have an electrically modifiable adhesive strength. Accordingly, preferably, the adhesive tape may be an optically clear adhesive transfer tape configured to have an electrically modifiable adhesive strength that can be single-layered or multi-layered. Furthermore, the adhesive tape may be configured to have an electrically modifiable adhesive strength that is either single-sided or double-sided, depending on the position of carrier layer T as described above. Each of the single-sided or double-sided adhesive tapes configured to have an electrically modifiable adhesive strength may be single-layered (i.e. comprise only one layer of adhesive on a face of the carrier layer T) or multi-layered (i.e. comprise two or more layers of adhesive on a face of the carrier layer T).

A third aspect of the present invention is an adhesive tape comprising at least layers as follows:
(a) a layer C of adhesive, the layer C of adhesive containing the adhesive composition of the first aspect, wherein the adhesive composition contains no ionic liquid, i.e. 0 wt % ionic liquid; and
(b) optionally a carrier layer T, preferably wherein the carrier layer T is electrically conductive.

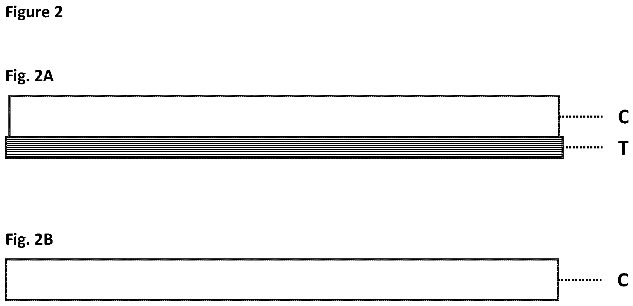

In certain preferred embodiments, the adhesive tape of the present invention comprises the layer C of adhesive and a carrier layer T (cf. Fig. 2A), preferably without the presence of a layer D of adhesive (i.e., containing one or more ionic liquids). More preferably, the adhesive tape of the present invention is a single-sided, single-layered adhesive tape as shown in Fig. 2A.

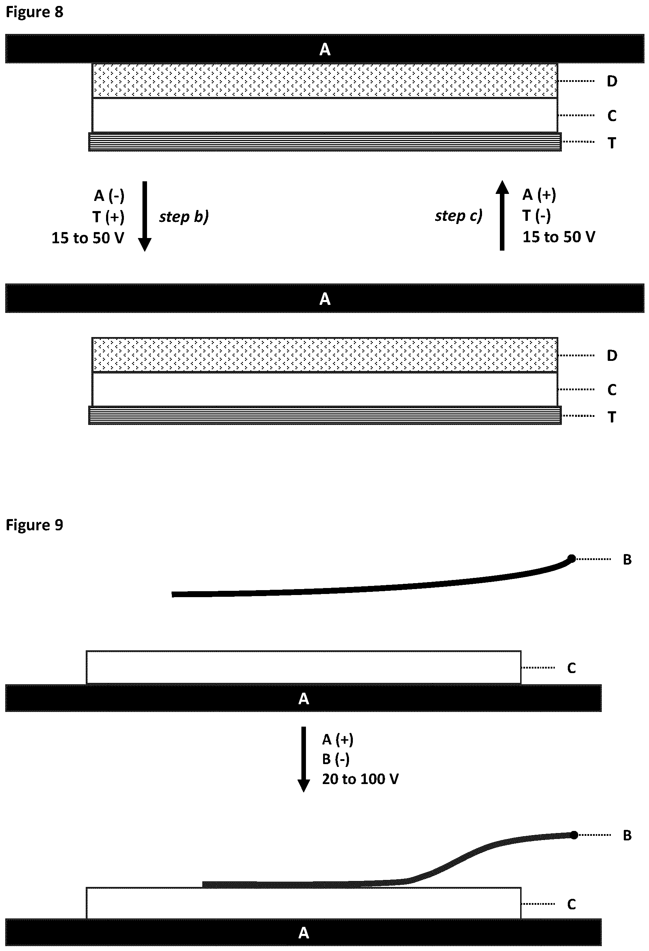

In certain preferred embodiments, the adhesive tape of the present invention comprises the layer C of adhesive, preferably without the presence of a layer D of adhesive and a carrier layer T (cf. Fig. 2B). Preferably, this adhesive transfer tape is an optically clear adhesive tape, more preferably an optically clear bondable adhesive tape. In particularly preferred embodiments, the adhesive tape of the present invention is a single-layered adhesive transfer tape as shown in Fig. 2B. The single-layered adhesive transfer tape as shown in Fig. 2B, can also be used to achieve electroadhesion as described in detail below and shown in Fig. 9 of the present invention.

For numerous industrial applications, however, the adhesive tape, according to further preferred embodiments, is produced in such a way as to permit economical storage and use, more particularly in the form of rolls. In that case, individual adaptation to the particular dimensions is needed, especially for the use of the adhesive tape for bonding, electroadhesion, rebonding and debonding according to the eighth aspect of the present invention described below.

A fourth aspect of the present invention is a method for modifying the adhesive strength of the single-sided adhesive tape of the present invention comprising layer D of adhesive and carrier layer T, the method comprising at least steps as follows:
a) connecting a direct-current (DC) voltage source to a substrate A, preferably being electrically conductive, and to the carrier layer T, the substrate A being disposed on a first face of the layer D of adhesive having the carrier layer T being disposed on a second face of the layer D of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
   thereby weakening the adhesive strength in an interface between the layer D of adhesive and the substrate A; and/or
c) applying a voltage of 5 to 50 V, preferably 5 to 10 V, when a positive terminal of the DC voltage source is connected to the substrate A and a negative terminal of the DC voltage source is connected to the carrier layer T,
   thereby increasing the adhesive strength in an interface between the layer D of adhesive and the substrate A; or
d) applying a voltage according to step c), followed by applying a voltage according to step b); and optionally followed by applying a voltage according to step c), or followed by repeating the sequence of steps c) and b) in this order at least one time.

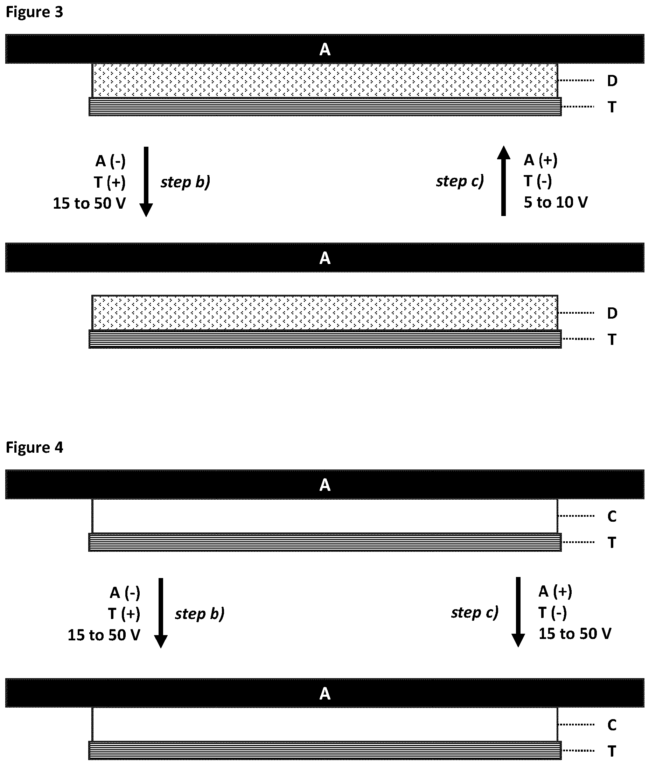

Preferably, the method according to the fourth aspect modifies the adhesive strength of the single-sided, single-layered adhesive tape as shown in Fig. 1A by the method illustrated in Fig. 3 of the present invention.

In the method of the fourth aspect, the single-sided adhesive tape comprising layer D of adhesive is initially bonded to the substrate A. In certain preferred embodiments, when applying a voltage according to step b), thereby weakening the adhesive strength in an interface between the layer D of adhesive and the substrate A, this may result in a decreased bonding strength. Bonding strength, i.e. peel adhesion, significantly drops, by adjusting a time of voltage application, a polarity of voltage and/or a level of voltage, resulting in a lower peel adhesion (lower N/cm values when measured according to test A) compared to the initial adhesive strength, or resulting in complete debonding of the adhesive tape from the substrate A via the layer D of adhesive. When applying a voltage according to step c), thereby increasing the adhesive strength in an interface between the layer D of adhesive and the substrate A, this may result in an increased bonding strength, i.e. higher peel adhesion (higher N/cm values when measured according to test A) compared to the initial adhesive strength. Alternatively, when step c) follows step b), this may result in rebonding (i.e., bonding after debonding) of the adhesive tape between the substrate A via the layer D of adhesive. A combination of bonding and debonding steps in any order is also referred to hereinafter as dynamically controlling the bonding strength of the adhesive composition.

In certain preferred embodiments according to step d) of the method, when applying a voltage according to step c), followed by applying a voltage according to step b), this may result in debonding of the adhesive tape from the substrate A via the layer D of adhesive. When the sequence of steps c) and b) is followed by step c) again, this may result in rebonding. In a more preferred embodiment, the sequence of steps c) and b) is repeated in this order at least one time, more preferably two times or more. In other words, rebonding of the single-sided adhesive tape comprising layer D of adhesive may be performed more than one time, i.e. bonding and debonding may be cycled.

A fifth aspect of the present invention is a method for modifying the adhesive strength of the single-sided adhesive tape of the present invention comprising layer C of adhesive and carrier layer T, the method comprising at least steps as follows:
a) connecting a direct-current (DC) voltage source to a substrate A, preferably being electrically conductive, and to the carrier layer T, the substrate A being disposed on a first face of the layer C of adhesive having carrier layer T being disposed on a second face of the layer C of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
   thereby increasing the adhesive strength in an interface between the layer C of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the carrier layer T,
   thereby increasing the adhesive strength in an interface between the layer C of adhesive and the carrier layer T.

Preferably, the method according to the fifth aspect modifies the adhesive strength of the single-sided, single-layered adhesive tape as shown in Fig. 2A by the method illustrated in Fig. 4 of the present invention.

In the method of the fifth aspect, the single-sided adhesive tape comprising layer C of adhesive is initially bonded to the substrate A. When applying a voltage according to step b), thereby increasing the adhesive strength in an interface between the layer C of adhesive and the substrate A, or when applying a voltage according to step c), thereby increasing the adhesive strength in an interface between the layer C of adhesive and the carrier layer T, this refers to an increased bonding strength between C and A or C and T respectively, i.e. higher peel adhesion (higher N/cm values when measured according to test A) compared to the initial adhesive strength. In a more preferred embodiment, when step c) follows step b) or when step b) follows step c), adhesive strength in an interface between the layer C of adhesive and the carrier layer T and in an interface between the substrate A and the carrier layer T may be increased simultaneously.

The method of the fifth aspect likewise describes a method for modifying the adhesive strength of the single-layered adhesive transfer tape of the present invention comprising layer C of adhesive as shown in Fig. 2B, when in the method the carrier layer T is replaced by a substrate B, the method comprising at least steps as follows:
a) connecting a direct-current (DC) voltage source to a substrate A, preferably being electrically conductive, and to a substrate B, preferably being electrically conductive, the substrate A being disposed on a first face of the layer C of adhesive and the substrate B being disposed on a second face of the layer C of adhesive; and
b) applying a voltage of 5 to 50 V, preferably 15 to 50 V, when a negative terminal of the DC voltage source is connected to the substrate A and a positive terminal of the DC voltage source is connected to the substrate B,
   thereby increasing the adhesive strength in an interface between the layer C of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the substrate B,
   thereby increasing the adhesive strength in an interface between the layer C of adhesive and the substrate B.

A sixth aspect of the present invention is a method for modifying the adhesive strength of the single-layered adhesive transfer tape of the present invention comprising layer D of adhesive, the method comprising at least steps as follows:
a) connecting a direct-current (DC) voltage source to a substrate A, preferably being electrically conductive, and to a substrate B, preferably being electrically conductive, the substrate A being disposed on a first face of the layer D of adhesive and the substrate B being disposed on a second face of the layer D of adhesive; and
b) applying a voltage of 5 to 50 V, preferably 15 to 50 V, when a negative terminal of the DC voltage source is connected to the substrate A and a positive terminal of the DC voltage source is connected to the substrate B,
   thereby weakening the adhesive strength in an interface between the layer D of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the substrate B,
   thereby weakening the adhesive strength in an interface between the layer D of adhesive and the substrate B; and/or
d) applying a voltage of 5 to 50 V, preferably 5 to 10 V, when a negative terminal of the DC voltage source is connected to the substrate A and a positive terminal of the DC voltage source is connected to the substrate B,
   thereby increasing the adhesive strength in an interface between the layer D of adhesive and the substrate B; and/or
e) applying a voltage of 5 to 50 V, preferably 5 to 10 V, when a positive terminal of the DC voltage source is connected to the substrate A and a negative terminal of the DC voltage source is connected to the substrate B,
   thereby increasing the adhesive strength in an interface between the layer D of adhesive and the substrate A; or
f) applying a voltage according to step d), followed by applying a voltage according to step c); and optionally followed by applying a voltage according to step d), or followed by repeating the sequence of steps d) and c) in this order at least one time; or
g) applying a voltage according to step e), followed by applying a voltage according to step b); and optionally followed by applying a voltage according to step e), or followed by repeating the sequence of steps e) and b) in this order at least one time.

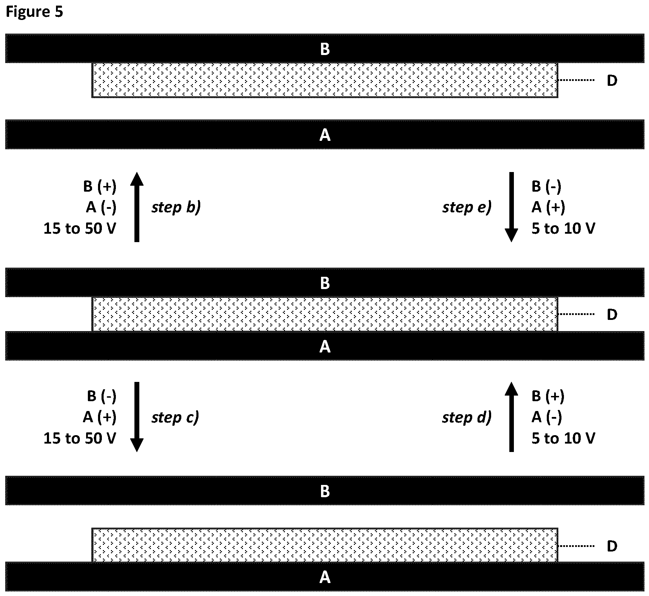

Preferably, the method according to the sixth aspect modifies the adhesive strength of the single-layered adhesive transfer tape as shown in Fig. 1B by the method illustrated in Fig. 5 of the present invention.

In the method of the sixth aspect, the single-layered adhesive transfer tape comprising layer D of adhesive is initially bonded to the substrates A and B. In certain preferred embodiments, when applying a voltage according to steps b) or c), thereby weakening the adhesive strength in an interface between the layer D of adhesive and the substrate A or B, this may result in a decreased bonding strength. Bonding strength, i.e. peel adhesion, significantly drops, by adjusting a time of voltage application, a polarity of voltage and/or a level of voltage, resulting in a lower peel adhesion (lower N/cm values when measured according to test A) compared to the initial adhesive strength, or resulting in complete debonding of the adhesive transfer tape from the substrate A or B via the layer D of adhesive. When applying a voltage according to steps d) or e), thereby increasing the adhesive strength in an interface between the layer D of adhesive and the substrate A or B, this may result in an increased bonding strength, i.e. higher peel adhesion (higher N/cm values when measured according to test A) compared to the initial adhesive strength. Alternatively, when step d) or e) follows step b) or c), this may result in rebonding (i.e., bonding after debonding) of the adhesive transfer tape between the substrate A or B via the layer D of adhesive.

In certain preferred embodiments, when applying a voltage according to step d) or e), followed by applying a voltage according to steps b) or c), this may result in debonding of the adhesive transfer tape from the substrate A or B via the layer D of adhesive. When the sequence of steps d) or e) and b) or c) is followed by steps d) or e) again, this may result in rebonding again. In a more preferred embodiment, the sequence of steps d) or e) and b) or c) is repeated in this order at least one time, more preferably two times or more. In other words, rebonding of the single-layered adhesive transfer tape comprising layer D of adhesive may be performed more than one time, i.e. may be cycled.

A seventh aspect of the present invention is a method for modifying the adhesive strength of the double-sided, single-layered adhesive tape of the present invention, comprising at least steps as follows:
a) connecting a direct-current (DC) voltage source to the carrier layer T, and to a substrate B, preferably being electrically conductive, the substrate B being disposed on the outer face of the layer D of adhesive; and
b) applying a voltage of 5 to 50 V, preferably 15 to 50 V, when a negative terminal of the DC voltage source is connected to the substrate B and a positive terminal of the DC voltage source is connected to the carrier layer T,
   thereby weakening the adhesive strength in an interface between the layer D of adhesive and the substrate B; and/or
c) applying a voltage of 5 to 50 V, preferably 15 to 50 V, when a positive terminal of the DC voltage source is connected to the substrate B and a negative terminal of the DC voltage source is connected to the carrier layer T,
   thereby weakening the adhesive strength in an interface between the layer D of adhesive and the carrier layer T; and/or
d) applying a voltage of 5 to 50 V, preferably 5 to 10 V, when a positive terminal of the DC voltage source is connected to the substrate B and a negative terminal of the DC voltage source is connected to the carrier layer T,
   thereby increasing the adhesive strength in an interface between the layer D of adhesive and the substrate B; or
e) applying a voltage according to step d), followed by applying a voltage according to step b).

Alternatively, the method for modifying the adhesive strength of the double-sided, single-layered adhesive tape of the present invention according to the seventh aspect comprises steps as follows:
a') connecting a direct-current (DC) voltage source to the carrier layer T, and to a substrate A, preferably being electrically conductive, the substrate A being disposed on the outer face of the layer C of adhesive; and
f) connecting the negative terminal of the DC voltage source to the substrate A and a positive terminal of the DC voltage source to the carrier layer T and applying a voltage of 5 to 50 V,
   thereby increasing the adhesive strength in an interface between the layer C of adhesive and the substrate A; and/or
g) applying a voltage according to above step d) of the seventh aspect, thereby increasing the adhesive strength in an interface between layer D of adhesive and the substrate B, and applying a voltage according to step f), thereby increasing the adhesive strength in an interface between the layer C of adhesive and the substrate A.

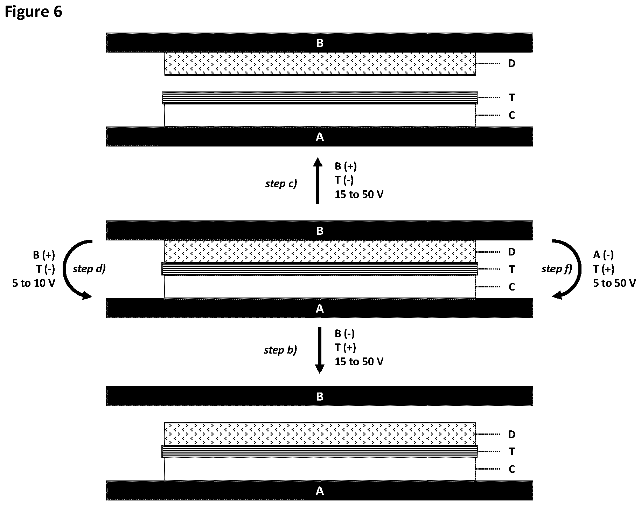

Preferably, the method according to the seventh aspect modifies the adhesive strength of the double-sided, single-layered adhesive tape as shown in Fig. 1C by the method illustrated in Fig. 6 of the present invention.

In the method of the seventh aspect, the double-sided, single-layered adhesive tape is initially bonded to the substrates A and B. In certain preferred embodiments, when applying a voltage according to steps b) or c), thereby weakening the adhesive strength in an interface between the layer D of adhesive and the substrate B or the carrier layer T, this may result in a decreased bonding strength. Bonding strength, i.e. peel adhesion, significantly drops, by adjusting a time of voltage application, a polarity of voltage and/or a level of voltage, resulting in a lower peel adhesion (lower N/cm values when measured according to test A) compared to the initial adhesive strength, or resulting in complete debonding. When applying a voltage according to steps d) or f), thereby increasing the adhesive strength in an interface between the layer D of adhesive and the substrate B, or thereby increasing the adhesive strength in an interface between the layer C of adhesive and the substrate A, this may result in an increased bonding strength, i.e. higher peel adhesion (higher N/cm values when measured according to test A) compared to the initial adhesive strength.

In certain preferred embodiments, applying a voltage according to step d), followed by applying a voltage according to step b), this may result in debonding of the adhesive transfer tape from the substrate B via the layer D of adhesive. When applying a voltage according to step b), and applying a voltage according to step c), this may result in debonding of the layer D of adhesive from both the carrier layer T and from the substrate B. On the other hand, when applying a voltage according to step d), and applying a voltage according to step f), this may result in increased adhesive strength in the interfaces of the adhesive tape to substrates A and B.

An eighth aspect of the present invention is a method for modifying the adhesive strength of the multi-layered transfer tape of the present invention, comprising at least steps as follows:
a) connecting a direct-current (DC) voltage source to a substrate A, preferably being electrically conductive, and to a substrate B, preferably being electrically conductive, the substrate B being disposed on the outer face of the layer D of adhesive, and the substrate A being disposed on the outer face of the layer C of adhesive; and
b) applying a voltage of 5 to 50 V, preferably 15 to 50 V, when a negative terminal of the DC voltage source is connected to the substrate B and a positive terminal of the DC voltage source is connected to the substrate A,
   thereby weakening the adhesive strength in an interface between the layer D of adhesive and the substrate B; and/or
c) applying a voltage of 5 to 50 V, preferably 15 to 50 V, when a positive terminal of the DC voltage source is connected to the substrate B and a negative terminal of the DC voltage source is connected to the substrate A,
   thereby increasing the adhesive strength in an interface between the layer D of adhesive and the substrate B, and also increasing the adhesive strength in an interface between the layer C of adhesive and the substrate A; or
d) applying a voltage according to step c), followed by applying a voltage according to step b); and optionally followed by applying a voltage according to step c), or followed by repeating the sequence of steps c) and b) in this order at least one time.

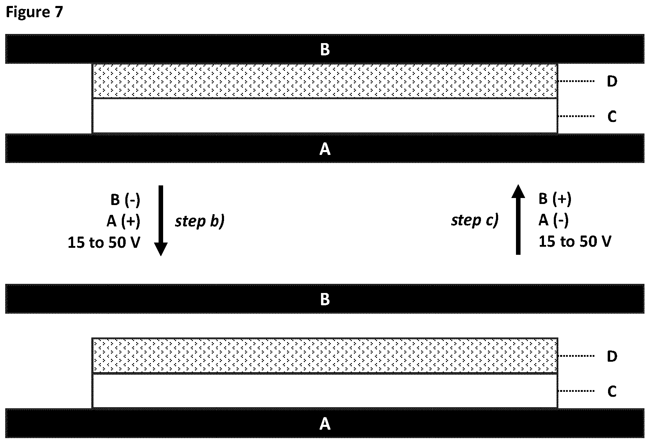

Preferably, the method according to the eighth aspect modifies the adhesive strength of the multi-layered adhesive transfer tape as shown in Fig. 1E by the method illustrated in Fig. 7 of the present invention.

In the method of the eighth aspect, the multi-layered transfer tape comprising layers C and D of adhesive is initially bonded to the substrates A and B. In certain preferred embodiments, when applying a voltage according to step b), thereby weakening the adhesive strength in an interface between the layer D of adhesive and the substrate B, this may result in a decreased bonding strength. Bonding strength, i.e. shear strength, significantly drops, by adjusting a time of voltage application, a polarity of voltage and/or a level of voltage, resulting in a lower shear strength (lower MPa values) compared to the initial shear strength of the adhesive, or resulting in complete debonding of the adhesive tape from the substrate B via the layer D of adhesive- When applying a voltage according to step c), thereby increasing the adhesive strength in an interface between the layer D of adhesive and the substrate B and also increasing the adhesive strength in an interface between the layer C of adhesive and the substrate A, this may result in an increased bonding strength, i.e. higher shear strength (higher MPa values compared to the initial shear strength of the adhesive. Alternatively, when step c) follows step b), this may result in rebonding (i.e., bonding after debonding) of the adhesive tape between the substrate B via the layer D of adhesive.

In certain preferred embodiments according to step d) of the method, when applying a voltage according to step c), followed by applying a voltage according to step b), this may result in debonding of the adhesive tape from the substrate B via the layer D of adhesive. When the sequence of steps c) and b) is followed by step c) again, this may result in rebonding. In a more preferred embodiment, the sequence of steps c) and b) is repeated in this order at least one time, more preferably two times or more. In other words, rebonding of the multi-layered transfer tape comprising layers C and D of adhesive may be performed more than one time, i.e. bonding and debonding may be cycled.

A ninth aspect of the present invention is a method for modifying the adhesive strength of the single-sided, multi-layered adhesive tape of the present invention, comprising at least steps as follows:
a) connecting a direct-current (DC) voltage source to the carrier layer T, and to a substrate A, preferably being electrically conductive, the substrate A being disposed on the outer face of the layer D of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
   thereby weakening the adhesive strength in an interface between the layer D of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the carrier layer T,
   thereby increasing the adhesive strength in an interface between the layer D of adhesive and the substrate A; or
d) applying a voltage according to step c), followed by applying a voltage according to step b); and optionally followed by applying a voltage according to step c), or followed by repeating the sequence of steps c) and b) in this order at least one time.

Preferably, the method according to the ninth aspect modifies the adhesive strength of the single-sided, multi-layered adhesive tape as shown in Fig. 1D by the method illustrated in Fig. 8 of the present invention.

In the method of the ninth aspect, the single-sided, multi-layered adhesive tape is initially bonded to the substrate A. In certain preferred embodiments, when applying a voltage according to step b), thereby weakening the adhesive strength in an interface between the layer D of adhesive and the substrate A, this may result in a decreased bonding strength. Bonding strength, i.e. peel adhesion, significantly drops, by adjusting a time of voltage application, a polarity of voltage and/or a level of voltage, resulting in a lower peel adhesion (lower N/cm values when measured according to test A) compared to the initial adhesive strength, or resulting in complete debonding of the adhesive tape from the substrate A via the layer D of adhesive. When applying a voltage according to step c), thereby increasing the adhesive strength in an interface between the layer D of adhesive and the substrate A, this may result in an increased bonding strength, i.e. higher peel adhesion (higher N/cm values when measured according to test A) compared to the initial adhesive strength. Alternatively, when step c) follows step b), this may result in rebonding (i.e., bonding after debonding) of the adhesive tape between the substrate A via the layer D of adhesive.

In certain preferred embodiments according to step d) of the method, when applying a voltage according to step c), followed by applying a voltage according to step b), this may result in debonding of the adhesive tape from the substrate A via the layer D of adhesive.

When the sequence of steps c) and b) is followed by step c) again, this may result in rebonding. In a more preferred embodiment, the sequence of steps c) and b) is repeated in this order at least one time, more preferably two times or more. In other words, rebonding of the single-sided, multi-layered adhesive tape may be performed more than one time, i.e. bonding and debonding may be cycled.

In certain embodiments of the present invention, the T may serve as a carrier or backing layer for the adhesive tape of the present invention, especially for single-sided adhesive tapes and multi-layered (two-layered) single-sided adhesive tapes and also for double-sided adhesive tape where the carrier layer T is present in the middle of the adhesive tape. Preferably, the adhesive tape of the present invention comprises a carrier layer T, more preferably the carrier layer T is electrically conductive. For example, the electrically conductive carrier layer T may be a metalized polymer film, preferably an aluminum- or silver-coated polymer film, more preferably aluminium-PET or tin coated PET or silver-PET, wherein tin or silver-PET is more preferred in terms of improved corrosion resistance. Poly-3,4-ethylendioxythiophen indium tin oxide (PEDOT-ITO)-coated PET, PEDOT-coated metalized, CNT-coated PET or other chemically coated (e.g., chromate coated) metalized PET films can be used as an alternative to metalized PET. The use of a chemically coated or a metal-free conductive carrier layer such as a conductive carbon-coated film is beneficial to prevent the risk of corrosion of a metal-based carrier layer.

Through the adhesive tape of the present invention, therefore, the adhesive tape of the present invention can be bonded to the target adherend substrate (referred to as substrate B or A hereinafter) and electrically debonded or separated from one of the substrates.

In certain preferred embodiments, through the adhesive tape of the present invention, the substrates A and B can be bonded to one another and electrically separated from one another. Even without both substrates have to be electrically conductive. Preferably, at least one of substrates A or B is electrically conductive, and so a voltage can also be applied here. In certain preferred embodiments, the electrically conductive substrate A and B may be, for example, a conductive metal substrate, metalized polymer, preferably aluminum (Al)-/ tin (Sn)-/ silver (Ag)-coated polymer, more preferably aluminium-PET or tin-PET or silver-PET plate. For providing a metalized polymer, silver nanowires or a conductive paint spray comprising metal particles (e.g. Al, Sn or Ag) may be used, thereby applying a metal particle coating to a polymer substrate. In certain preferred embodiments, the substrate A and/or B is preferably the target adherend substrate, in particular, a steel plate or electrically conductive coated substrate.

In certain preferred embodiments, the temporal duration for which the voltage is applied in step a) of the above-mentioned method of the present invention may be less than 10 minutes. According to particularly preferred embodiments, the temporal duration for which the voltage is applied in step a) here may be between 30 seconds and 5 minutes.

Without wishing to be bound by any particular theory, the inventor assumes the mechanism to be as follows: as a result of the voltage being applied, the electrolyte comprised in the adhesive composition of the present invention undergoes migration, more particularly a parting of the anions and cations of an ionic liquid, in the layer D of adhesive. This greatly lowers the adhesion of the layer D (where the cations migrated) of adhesive to the adherend substrate (e.g., substrate B or A), enabling these layers to separate from one another.

Further, without wishing to be bound by any particular theory, in certain preferred embodiments of the present invention where layer C of adhesive (i.e., without the presence of ionic liquid) is present, when a negative terminal of a DC voltage source is connected to a substrate, preferably an electrically conductive substrate, which is disposed on the layer C of adhesive, upon a certain voltage application, the adhesive strength or peel adhesion on the negative terminal side becomes stronger because of combined effects of conducting salt electrolyte and the electro-responsive compounds, preferably zwitterionic monomers, the units of which after polymerization are present in the copolymer backbone or matrix. When negative DC voltage is applied, due to electrophoretic drag forces, the cations of the electro-responsive compounds, preferably zwitterionic monomers, and conducting salt, migrate to the conductive substrate to which the negative terminal of the DC voltage source is connected and enter the nano- or microscopic pores of the substrate and are locked therein. This is why the adhesive strength or peel adhesion increases in an interface between a conductive substrate and layer C of adhesive on the negative terminal side. The behavior reversed when ionic liquid is present (e.g., layer D of adhesive) in the adhesive tape or composition, in which bonding strength between adhesive and substrate increases to the positive voltage terminal.

Through the method of the present invention for modifying the adhesive strength of the adhesive tape of the present invention, the adhesive tape can be separated from the adherend substrate (e.g., substrate B or A) in a simple way without remnants of the adhesive tape remaining on the surface of the substrate. Likewise, does the method of the present invention for modifying the adhesive strength of the adhesive tape allow the adhesive tape to adhere to a substrate (A or B) in a simple way to varying demands, such as the uses according to the tenth aspect of the present invention as set out below, by controlling bonding strength as a result of adjusting the time or the polarity of voltage applied to the tape, or the level of voltage. On top of that, the adhesive composition and adhesive tape has an electrically modifiable bonding strength, and as such can be rebonded on demand by controlling the rate of electrochemical stimuli or polarities DC voltage according to the method of the present invention.

A tenth aspect of the present invention is a use of the adhesive tape of the present invention for bonding, electroadhesion, rebonding and debonding in:
(i) different metal surfaces or substrates coated with conductive materials;
(ii) robotics, preferably in the manufacturing of robotic gripping arm;
(iii) haptic devices;
(iv) debonding applications;
(v) sealing applications;
(vi) applications where high bonding strength or debonding is needed without application of heat, light or pressure;
(vii) sensing applications;
(viii) consumer electronics;
(ix) electronic packaging;
(x) semi-structural bonding applications;
(xi) microelectronics;
(xii) battery mounting for EVs or in cell phones with reusable functions;
(xiii) cell phone back cover mounting;
(xiv) biomedical applications;
(xv) recycling applications (e.g., disassembly and reassembly of products);
(xvi) microfabrication (e.g., transfer and positioning of small components);
(xvii) environmental and structural adaptability (adaptability to surface conditions or structural changes);
(xviii) application in smart wearable electronics (e.g., health monitoring); and
(xix) optoelectronics (e.g., bonding camera modules).

### BRIEF DESCRIPTION OF FIGURES

Figure 1 schematically illustrates embodiments of an adhesive tape according to the second aspect of the present invention, namely a single-sided, single-layered adhesive tape comprising layer D of adhesive and carrier layer T (Fig. 1A), a single-layered adhesive transfer tape comprising only layer D of adhesive, without the presence of layer C of adhesive and carrier layer T (Fig. 1B), a double-sided, single-layered adhesive tape comprising carrier layer T disposed between layer D of adhesive and layer C of adhesive (Fig. 1C), a single-sided, multi-layered adhesive tape comprising layer C of adhesive disposed between carrier layer T and layer D of adhesive (Fig. 1D), and a multi-layered adhesive transfer tape comprising layer D of adhesive and layer C of adhesive without carrier layer T (Fig. 1E).
Figure 2 schematically illustrates embodiments of an adhesive tape according to the third aspect of the present invention, namely a single-sided, single-layered adhesive tape comprising layer C of adhesive and carrier layer T (Fig. 2A), and a single-layered adhesive transfer tape comprising only layer C of adhesive, without the presence of layer D of adhesive and carrier layer T (Fig. 2B).
Figure 3 schematically illustrates a method for modifying the adhesive strength of a single-sided, single-layered adhesive tape comprising layer D of adhesive and carrier layer T (cf. Fig. 1A).
Figure 4 schematically illustrates a method for modifying the adhesive strength of a single-sided, single-layered adhesive tape comprising layer C of adhesive and carrier layer T (cf. Fig. 2A).
Figure 5 schematically illustrates a method for modifying the adhesive strength of a single-layered adhesive transfer tape comprising layer D of adhesive (cf. Fig. 1B).
Figure 6 schematically illustrates a method for modifying the adhesive strength of a double-sided, single-layered adhesive tape comprising carrier layer T disposed between layers D and C of adhesive (cf. Fig. 1C).
Figure 7 schematically illustrates a method for modifying the adhesive strength of a multi-layered adhesive transfer tape comprising layer D of adhesive and layer C of adhesive without carrier layer T (cf. Fig. 1E).
Figure 8 schematically illustrates a method for modifying the adhesive strength of a single-sided, multi-layered adhesive tape comprising layer C of adhesive disposed between carrier layer T and layer D of adhesive (cf. Fig. 1D).
Figure 9 schematically illustrates a method for inducing electroadhesion to a single-layered adhesive transfer tape comprising only layer C of adhesive (cf. Fig. 2B).

### DETAILED DESCRIPTION OF EMBODIMENTS

The present invention relates to an adhesive tape which may take any desired converted form, with adhesive tape rolls being preferred. The adhesive tape, more particularly in web form, may be produced either in the form of a roll, i.e., in the form of an Archimedean spiral rolled up onto itself, or as an adhesive strip, of the kind obtained in the form of die-cuts, for example.

The adhesive tape of the present invention is present more particularly in web form. A web refers to an object whose length (extent in x direction) is greater by a multiple than its width (extent in y direction), e.g., by a x:y ratio of at least 10:1, and the width is approximately, preferably exactly, the same along the entire length.

The general expression "adhesive tape" synonymously also called "adhesive strip", in the sense of the present invention encompasses all sheetlike structures, such as two-dimensionally extended films or film portions, tapes with extended length and limited width, tape portions and the like, lastly also diecuts or labels.

As well as the lengthwise extent (x direction) and widthwise extent (y direction), the adhesive tape also has a thickness (z direction), extending perpendicularly to both extents, with the widthwise extent and lengthwise extent being greater by a multiple than the thickness. The thickness is extremely similar, preferably exactly the same, over the entire two-dimensional extent of the adhesive tapes as defined by length and width. The statements apply analogously to the carrier, which as an integral constituent of the adhesive tape forms a layer in x and y directions. It will be appreciated that the individual layers are disposed one atop another along the z direction.

All the statements in the description apply to the adhesive composition of the present invention, to the adhesive tape of the present invention, to the method of the present invention for modifying the adhesive strength of the adhesive tape of the present invention, and to the use of the adhesive tape of the present invention.

The present invention, moreover, embraces all the features which are subjects of any dependent claims. Further, the present invention embraces combinations of individual features with one another, including at different preference levels. The present invention thus embraces, for example, the combination of a first feature identified as being "preferred" with a second feature identified as being, e.g., "particularly preferred". In this context, subjects identified as part of "embodiments", likewise at different preference levels, are also embraced. In other words, where the present description refers to different levels of preferences, combinations of these preferred embodiments and/or features shall also be deemed as disclosed if this combination is technically meaningful.

Hereinafter, the use of the term "comprising" should be understood as disclosing in a non-limited way, that is to say that additional components or steps can be present or implemented, as long as this is technically meaningful. For a more restricted embodiment, the terms "consisting of" will be used and have to be understood as disclosing in a limited way, that is to say without any additional component or step.

### COMPONENTS OF ADHESIVE COMPOSITION

The adhesive composition of the present invention is prepared by polymerizing a mixture comprising the components as described above. Further details of these components, including preferred embodiments, are given below.

### Monomer (a1)

The adhesive composition of the present invention is prepared by polymerizing a mixture comprising monomer (a1) as component a) of the mixture. The monomer (a1) is an acrylate monomer from the group of the (meth)acrylic esters containing at least one oxygen atom. In the mixture, the one monomer (a1) may be contained or two or more thereof may be contained in combination. The one or more monomer(s) (a1) according to the invention are present in an amount of 35 wt % to 70 wt %, preferably 45 wt % to 68 wt %, more preferably 50 wt % to 66 wt %, based on the total weight of the mixture.

The monomer (a1) contains preferably at least two oxygen atoms, even more preferably 2 to 20 oxygen atoms. To the skilled person it is clear that the at least one oxygen atom (or the at least two oxygen atoms) in the acrylate monomer is (are) present in addition to the two O atoms (oxygen atoms) of the ester functionality, i.e. (C=O)O. In other words, monomer (a1) in total contains at least three oxygen atoms, namely the two oxygen atoms of the ester functionality and an additional oxygen atom. Preferably, monomer (a1) in total contains at least four oxygen atoms, namely the two oxygen atoms of the ester functionality and two additional oxygen atoms. The at least one oxygen atom (or the at least two oxygen atoms) is (are) typically present in the hydrocarbon part of the alcohol component of the (meth)acrylic ester. The expression "hydrocarbon part" as used herein is the part of the ester which is introduced by an alcohol upon reaction with the carboxylic functional group of acrylic acid to form the ester.

In a preferred embodiment, the monomer (a1) is from the group of (meth)acrylic esters having 4 to 44 carbon atoms, preferably 7 to 44 carbon atoms, or the monomer (a1) and at least one oxygen atom or at least two oxygen atoms as described above. More preferably monomer (a1) is from the group of (meth)acrylic esters having 4 to 30 carbon atoms and comprising at least one oxygen atom, more preferred 8 to 30 carbon atoms and at least 2 oxygen atoms.

Preferred (meth)acrylic esters contain the at least one oxygen atom (or the at least two oxygen atoms in the hydrocarbon part of the alcohol component of the ester, wherein at least one non-adjacent CH₂ group is replaced by O. The hydrocarbon part of the alcohol component may be branched, unbranched or cyclic, saturated, or unsaturated, aliphatic or aromatic, substituted or unsubstituted, preferably it is branched or unbranched, saturated or unsaturated, and aliphatic since aromatic groups may cause colour.

In a more preferred embodiment, the hydrocarbon part of the alcohol component is based on polyethylene oxide (PEO). The PEO can be linear or branched, and preferably is linear. In an even more preferred embodiment, the monomer (a1) is based on the following formula (1).

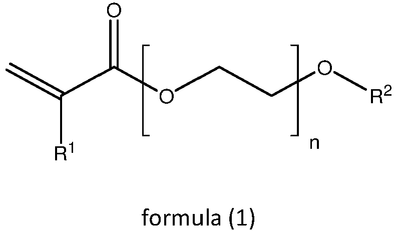

In present formula (1), R¹ is H or CH₃, R² is H, -C(=O)CH₂C(=O)CH₃, CH₃ or CH₂CH₃, preferably CH₃ or CH₂CH₃, and n is an integer between 1 and 18, preferably 1 and 15, more preferably 2 and 11. In a preferred embodiment at least one monomer (a1) used has a value n between 1 and 5, preferably 2 and 4. Preferred are monomers, which are liquid at 25 °C.

Examples of the (meth)acrylic esters include 2-(2-ethoxyethoxy)ethyl acrylate) (EEEA, also designated as EDGA, n=2, R¹=H, R²=CH₂CH₃), 2-[2-(2-methoxyethoxy)ethoxy]ethyl acrylate (n=3, R¹=H, R²=CH₃), diethylene glycol monomethyl ether methacrylate (n=2, R¹=CH₃, R²=CH₃), 2-ethoxyethyl methacrylate (n=1, R¹=CH₃, R²=CH₂CH₃), 2-methoxyethyl methacrylate (n=1, R¹=CH₃, R²=CH₃) and ethylene glycol monoacetoacetate monomethacrylate (n=1, R¹=CH₃, R²=-C(=O)CH₂C(=O)CH₃).

### Monomer (a2)

The adhesive composition of the present invention is prepared by polymerizing a mixture comprising monomer (a2) as component b) of the mixture. The monomer (a2) is an acrylate monomer from the group of the (meth)acrylic esters or amides containing at least one nitrogen atom. In the mixture, one monomer (a2) may be contained or two or more thereof may be contained in combination. The one or more monomer(s) (a2) according to the invention are present in an amount of 20 wt % to 40 wt %, preferably 22 wt % to 38 wt %, more preferably 24 wt % to 36 wt % based on the total weight of the mixture.

In a preferred embodiment, the monomer (a2) is from the group of (meth)acrylic esters or amides having 4 to 25 carbon atoms, more preferably 5 to 15 carbon atoms, and even more preferably 5 to 9 carbon atoms. Those ranges refer to the (meth)acrylic esters and (meth)acrylic esters amides. This achieves particularly good characteristics with regard to the object to be achieved.

The monomer (a2) is from the group of (meth)acrylic esters or amides having at least one nitrogen atom within the molecule and may have one nitrogen atom or two or more nitrogen atoms. Moreover, because the monomer (a2) has an (meth)acrylic functionality within the molecule, the monomer (a2) is a monofunctional monomer. The monomer (a2) is a component copolymerizable with the monomer (a1). This achieves particularly good characteristics with regard to the object to be achieved.

If monomer (a2) is a (meth)acrylic ester, the at least one nitrogen atom (or the at least two nitrogen atoms) is (are) typically present in the hydrocarbon part of the alcohol component of the (meth)acrylic ester, wherein at least one non-adjacent CH₂ group is replaced by N. The hydrocarbon part of the alcohol component may be branched, unbranched or cyclic, saturated, or unsaturated, aliphatic or aromatic, substituted or unsubstituted, preferably it is branched or unbranched, saturated or unsaturated, and aliphatic since aromatic groups may cause colour.

In the present invention, by use of the monomer (a2), a proper degree of polarity can be given to the acrylic copolymer. This can provide a pressure-sensitive adhesive sheet that keeps a high adhesive force and adhesion reliability (particularly, repulsion resistance and holding power) when the sheet is bonded and can be easily peeled off from an adherend when the sheet is peeled. This achieves particularly good characteristics with regard to the object to be achieved.

In particular, with the use of the monomer (a2), a proper degree of polarity can be given to the acrylic copolymer and T_{g} can be controlled.

In a preferred embodiment, the monomer (a2) is based on the following formula (2).

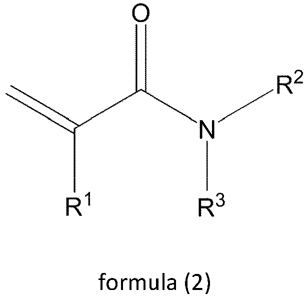

In present formula (2), R¹ is H or CH₃, R² or R³ is H, CH₃, CH₂OH, CH₂CH₂OH, CH₃ or CH₂CH₃, preferably CH₃ or CH₂CH₃.

The monomer (a2) is not particularly limited.

In a preferred embodiment the monomer (a2) is liquid at 25 °C.

Examples of the (meth)acrylamides include (meth)acrylamide, N-alkyl (meth)acrylamide, and N,N-dialkyl (meth)acrylamide. Examples of the N-alkyl (meth)acrylamide include N-methyl (meth)acrylamide, N-ethyl (meth)acrylamide, N-n-butyl (meth)acrylamide, and N-octyl acrylamide. Further, examples thereof include amino group-containing (meth)acrylamides such as dimethylaminoethyl (meth)acrylamide and diethylaminoethyl (meth)acrylamide. Next, examples of the N,N-dialkyl (meth)acrylamide include N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, N,N-di(t-butyl) (meth)acrylamide, N,N-dimethyl acrylamide (R¹ = H, R² = CH₃ R³ = CH₃) and N,N-dimethyl methacrylamide (R¹= CH₃, R² = CH₃, R³ = CH₃).

Further, examples of the (meth)acrylamides also include cyclic (meth)acrylamides having an N-acryloyl group such as (meth)acryloyl morpholine (like 4-acryloylmorpholine), (meth)acryloyl pyrrolidone, and (meth)acryloyl pyrrolidine. This achieves particularly good characteristics with regard to the object to be achieved.

Further, examples of the (meth)acrylamides also include N-dialkylaminoalkyl (meth)acrylamide monomers having an N-dialkylaminoalkyl group such as N-[3-(Dimethylamino)propyl]acrylamide, N-[2-(Dimethylamino)ethyl]acrylamide, N-[2-(Diethylamino)ethyl]-acrylamide. This achieves particularly good characteristics with regard to the object to be achieved.

Further, examples of the (meth)acrylamides include N-hydroxylalkyl (meth)acrylamide monomers having a hydroxyalkyl group having 1 to 4 carbon atoms. Examples of the N-hydroxylalkyl (meth)acrylamide monomers having a hydroxyalkyl group having 1 to 4 carbon atoms include N-methylol (meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl)methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide, N-(4-hydroxybutyl)acrylamide, N-(4-hydroxybutyl)methacrylamide, and N-methyl-N-2-hydroxyethyl(meth)acrylamide. This achieves particularly good characteristics with regard to the object to be achieved.

Further examples of the monomer (a2) are ethers of the previously mentions N-hydroxyalkyl (meth) acrylamide monomers, preferable methyl, ethyl, propyl, or butyl ether like N-(methoxymethyl)methacrylamide or N-(butoxymethyl)acrylamide. This achieves particularly good characteristics with regard to the object to be achieved.

Further, examples of the monomer (a2) other than the (meth)acrylamides include monomers having an amino group such as aminoethyl (meth)acrylate, N,N-dimethylaminoethyl (meth)acrylate, and N,N-dimethylaminopropyl (meth)acrylate; monomers having a maleimide skeleton such as N-cyclohexylmaleimide and N-phenylmaleimide; itaconimide monomers such as N-methylitaconimide, N-ethylitaconimide, N-butylitaconimide, N-2-ethylhexylitaconimide, N-laurylitaconimide, and N-cyclohexylitaconimide; cyanoacrylate monomers such as acrylonitrile and methacrylonitrile; and succinimide monomers such as N-(meth)acryloyloxymethylenesuccinimide, N-(meth)acryloyl-6-oxyhexamethylenesuccinimide, and N-(meth)acryloyl-8-oxyoctamethylenesuccinimide. This achieves particularly good characteristics with regard to the object to be achieved.

As the monomer (a2), preferred are (meth)acrylamides having one or two N-alkyl groups having 1 to 4 (more preferably 1 or 2) carbon atoms (for example, N,N-dialkyl acrylamides such as N,N-diethylacrylamide, and N,N-dimethylacrylamide); and N-(2-hydroxyethyl)acrylamide, N-(2-hydroxyethyl)methacrylamide, and N-(2-hydroxypropyl)methacrylamide from the viewpoint of a balance between adhesion reliability and flexibility of the adhesive layer (adhesive layer in the present invention) comprised of the adhesive composition in the present invention. Particularly, as the monomer (a2), preferred is N,N-dimethylacrylamide. This achieves particularly good characteristics with regard to the object to be achieved.

If the content of the monomer (a2) is controlled within the range, a high adhesive force, good dimensional stability, and adhesion reliability, particularly repulsion resistance and holding power, are maintained when the adhesive composition or adhesive tape of the present invention is bonded. On the other hand, at a content less than 1% by weight, processability may be reduced or adhesion reliability is lower, the adhesive may become too sticky and mechanically weak, whereas at a content more than 20% by weight the conductivity is reduced and T_{g} starts to increase, resulting in a stiffer nature.

### Monomer (a3)

Optionally, the adhesive composition of the present invention may be prepared by polymerizing a mixture comprising one or more acrylate monomers (a3) as component g) of the mixture, wherein the one or more acrylate monomers (a3) are different from acrylate monomers (a1) and (a2). If the mixture comprises monomer(a3) it may be present in an amount of 1 wt % to 20 wt %, preferably 5 wt % to 10 wt %, based on the total weight of the mixture.

The optionally present one or more acrylate monomers (a3) according to the present invention are not particularly limited and may for example be selected from the group consisting of acrylic acid, 2-hydroxyethyl methacrylate, 4-hydroxybutyl acrylate, methyl acrylate, methyl methacrylate, isobornyl acrylate, 2-ethylhexyl acrylate, n-butyl acrylate, 2-octyl acrylate, n-heptyl acrylate, 2-ethylhexyl diglycol acrylate, and combinations thereof. Selecting a monomer(a3) allows to tailor properties of the adhesive composition. For example, by introducing a monomer unit comprising carboxyl or hydroxy groups, such as acrylic acid or 4-hydroxybutyl acrylate, polarity of the mixture may be increased resulting in an increased solubility of electro-responsive compounds, preferably zwitterionic monomers, and therefore in an improved bonding strength of the end product (i.e. a tape comprising the adhesive composition).

According to particularly preferred embodiments, the one or more acrylate monomers (a3) may be selected from the group consisting of n-butyl acrylate, 2-ethylhexyl acrylate, 4-hydroxybutyl acrylate, and combinations thereof.

The (a3) monomers may serve two functions. If the electro-responsive monomers are not directly soluble in the UV syrup or in the liquid electrolyte formulation (i.e., mixture of UV syrup, conducting salt and other ingredients), then they can first be solubilized in a hydroxy or carboxy group-containing (a3) monomers. Afterward, the adhesive formulation can then be made. If the adhesive strength needs to be increased, then monomers having more polar groups or monomers with a higher number of methylene groups as described above can be used.

### Electro-responsive compound

The adhesive composition of the present invention is prepared by polymerizing a mixture comprising one or more electro-responsive compounds from the group of polymerizable preferably zwitterionic monomers monomers or non-polymerizable zwitterionic compounds as component c) of the mixture, preferably one or more zwitterionic monomers. The one or more electro-responsive compounds according to the invention are present in an amount of 0.1 wt % to 15 wt %, preferably 0.5 wt % to 10 wt %, more preferably 1 wt % to 5 wt %, based on the total weight of the mixture.

The mixture of the present invention may in principle comprise any type of electro-responsive compounds from the group of polymerizable zwitterionic monomers or non-polymerizable zwitterionic compounds, preferably zwitterionic monomers, known to the skilled person.

According to preferred embodiments, the mixture of the present invention may comprise one or more zwitterionic monomers. Exemplary zwitterionic monomers may include but are not limited to monomers based on phosphobetaine, carboxybetaine, sulfobetaine, or combinations thereof. Preferably the one or more zwitterionic monomers comprise phosphobetaine monomers, carboxybetaine monomers, sulfobetaine monomers, or combinations thereof. Mixtures of different types of zwitterionic monomers may be used. The one or more zwitterionic monomers may contain acrylic functional groups. More preferably, one or more zwitterionic acrylic monomers are used in the mixture of the present invention.

According to more preferred embodiments, the one or more polymerizable electro-responsive monomers, preferably zwitterionic monomers, that may be contained in the mixture of the present invention include but not limited to:
2-methacryloyloxyethyl phosphorylcholine;
2-[[2-(methacryloyloxy)ethyl]dimethylammonio]acetate;
3-[[2-(methacryloyloxy)ethyl]dimethylammonio]propionate;
3-[(3-acrylamidopropyl)dimethylammonio]propanoate;
3-[[2-(methacryloyloxy)ethyl]dimethylammonio]propane-1-sulfonate;
4-[[2-(methacryloyloxy)ethyl]dimethylammonio]butane-1-sulfonate;
3-[[2-(acryloyloxy)ethyl]dimethylammonio]propane-1-sulfonate;
3-[bis[2-(methacryloyloxy)ethyl](methyl)ammonio]propane-1-sulfonate;
3-[(3-methacrylamidopropyl)dimethylammonio]propane-1-sulfonate;
4-[(3-methacrylamidopropyl)dimethylammonio]butane-1-sulfonate.

Alternatively, the mixture of the present invention may comprise one or more non-polymerizable zwitterionic compounds. Compared to zwitterionic monomers which are polymerizable, the non-polymerizable zwitterionic compounds according to the embodiment of the present invention do not have any polymerizable group. In the present invention, the use of a polymerizable zwitterionic monomer is preferred since its distribution in the adhesive composition, obtained by polymerizing the mixture, is generally easier to achieve. However, the use of a non-polymerizable zwitterionic compound is also possible provided that it can be dissolved in the mixture of the other components prior to preparation of the adhesive composition by polymerizing this mixture. In this case, no zwitterionic monomer is necessary but the effects of the present invention may also be achieved by the non-polymerizable zwitterionic compound.

The non-polymerizable zwitterionic compounds may in principle be any type known to the skilled person. Exemplary non-polymerizable zwitterionic compounds may include but are not limited to phosphatidylcholine and non-polymerizable zwitterionic compounds based on phosphobetaine, carboxybetaine, sulfobetaine, or combinations thereof. Preferably the one or more non-polymerizable zwitterionic compounds are selected from the group comprising a zwitterionic polymer, obtained by polymerizing phosphobetaine monomers, carboxybetaine monomers, sulfobetaine monomers, or combinations thereof; phosphatidylcholine; and betaine, such as sulfobetaine, phosphobetaine and carboxy betaine. Mixtures of different types of non-polymerizable zwitterionic compounds may be used.

### Initiator

The mixture for polymerization in the present invention, which forms the basis for the adhesive composition of the present invention, comprises 0.005 to 10 wt %, preferably 0.005 to 5 wt %, more particularly 0.01 to 3 wt %, based on the total weight of the mixture, of at least one initiator as component d) of the mixture. If a mixture of two or more initiators is used, the above weight fractions are based typically on the total amount of the initiators.

The term "initiator" as used in the present disclosure refers to a compound that generate radicals or cations upon exposure to UV light and heat. The initiator used in the present invention is preferably an initiator which initiates a radical polymerization. Accordingly, the polymerization taking place in accordance with the present invention is preferably a radical polymerization.

Preferably, the initiator is a thermal initiator and/or photoinitiator, more preferably the initiator is a photoinitiator. According to a preferred embodiment, the adhesive composition is prepared by polymerizing a mixture comprising at least one, more preferably comprising at least two photoinitiators.

A thermal initiator is a compound that generates reactive species (free radicals, cations, or anions) upon exposure to heat. In the context of the present invention, the thermal initiator is not particularly limited. A photoinitiator is a compound that generates reactive species (free radicals, cations, or anions) when exposed to radiation (UV or visible). The photoinitiator typically comprises a UV initiator. Accordingly, the polymerization taking place in accordance with the present invention is preferably a UV polymerization.

The UV polymerization for syrup preparation and/or on the coated-out web may take place, for example, with the following photoinitiators, i.e. light-active initiators: 2,2-dimethoxy-2-phenylacetophenone (DMPA, 340 nm, 250 nm, Irgacure 651), 1-Hydroxy-cyclohexyl-phenyl-ketone (Irgacure 184), 2,4,6-trimethylbenzoyldiphenylphosphine oxide (BAPO, 295 nm, 370 nm), iodonium (4-methylphenyl)[4-(2-methylpropyl)phenyl]hexafluorophosphate (242 nm), 2,2'-bithiophen-5-yl 4-N,N'-diethylaminophenyl ketone (THBP), 6,6'-(((1E,1'E)-(2,5-bis(octyloxy)-1,4-phenylene)bis(ethene-2,1-diyl))bis(4,1-phenylene))bis(1,3,5-triamine-2,4-diamine)) (400 nm). As well as the stated initiators it is possible to use other known initiators from the following classes: alpha-amino ketones, metallocenes, iodonium salts, alpha-hydroxy ketones, or phosphines. Thermal stability exists preferably up to at least 50°C.

Depending on the energy of the radicals formed on initiator scission, they may be limited to initiating the acrylate polymerization or may additionally produce crosslinking reactions as well, such as, for example, 2-(4-methoxyphenyl)-4,6-bis(trichloromethyl)-1,3,5-triazine (MTT). Crosslinking of the chain is unwanted during the polymerization or syrup preparation, in order to keep the viscosities low for the coating. In the second polymerization step in the case of UV polymerization, crosslinking, photoactive crosslinkers may be added. They may also be polymerized electively into the chains. When using 2-oxo-1,2-diphenylethyl acrylate (benzoin acrylate) or analogues thereof, polymerization in a UV tunnel at a wavelength between 300 and 400 nm produces polymers which, after the end of the polymerization in the UV tunnel, can be crosslinked briefly and intensely with UV radiation at 250 nm by activation of the benzoin acrylate units incorporated by polymerization. These crosslinkers may equally be incorporated by polymerization during a thermally initiated solution polymerization, and activated later, after drying, with UV radiation.

Benzophenone methacrylate (Visiomer 6976, 300 nm) and analogues thereof can also be used, with their known benefits and disadvantages. These initiators reduce the contamination with small molecules but require a greater time for reaction because of the biomolecular reaction. Crosslinking must take place under inert conditions.

According to preferred embodiments, a mixture of more than one initiator or multiple different initiators is used for different polymerization steps, for example, preparation of the UV syrup and final curing preferably done by UV polymerization or UV web polymerization. Preferably, a mixture of multiple initiators with different molar absorption coefficients is being used.

According to more preferred embodiments, 2,2-dimethoxy-2-phenylacetophenone (Irgacure 651) and 1-hydroxy-cyclohexyl-phenyl-ketone (Irgacure 184) are used.

### Ionic liquid

The mixture for polymerization in the present invention, which forms the basis for the adhesive composition further comprises 0 wt % to 20 wt % of at least one ionic liquid as component e) of the mixture, based on the total weight of the mixture. If the mixture comprises at least one ionic liquid, it may preferably be present in an amount of 1 wt % to 10 wt %, more preferably 2 wt % to 15 wt %, and even more preferably 3 wt % to 12 wt %, based on the total weight of the mixture. The ionic liquid not only improves the wettability or tackiness of the surface of the adhesive composition or tape and prevents shrinking of the adhesive, but also improves the ion conductivity and most importantly, facilities adhesive debonding on demand.

Ionic liquids are therefore especially suitable as electrolytes in the context of the process of electrical separation. For example, when a voltage is applied, the anions migrate to the positive terminal (anode) of a source of the direct-current (DC) voltage; and the cations migrate to the negative terminal (cathode) of the source of the DC voltage.

It was surprisingly found that when the adhesive composition of the present invention contains no ionic liquid, namely 0 wt % ionic liquid, the peel adhesion between this layer of the adhesive without ionic liquid (e.g., layer C of adhesive) and a substrate B (e.g., steel plate) is increased when the substrate B is connected to the negative terminal of the DC voltage source and a voltage of 15 to 50 V is applied, thereby achieving bonding between the layer C and the substrate B. The peel adhesion between the layer C of adhesive and a substrate A or carrier layer T (e.g., metalized polymer film such as aluminum-coated PET) is not significantly changed (decreases) when the substrate A or layer T is connected to the positive terminal of the DC voltage source. However, the decrease in peel adhesion is not sufficient for debonding or adhesive splitting to occur. Therefore, no debonding or adhesive splitting between the layer C of adhesive and the substrate A or carrier layer T occurs.

It was further surprisingly found that when the adhesive composition of the present invention contains one or more ionic liquids, namely more than 0 wt % ionic liquid (e.g., layer D of adhesive), the peel adhesion between the layer D of adhesive and a substrate B (e.g., steel plate) connected to the positive terminal of the DC voltage source is increased when a voltage of 5 to 10 V is applied, thereby achieving bonding between the layer D and the substrate B. The peel adhesion between the layer D of adhesive and the substrate A or carrier layer T (e.g., metalized polymer) is lowered when the substrate A or carrier layer T is connected to the negative terminal of the DC voltage source and a voltage of 15 to 50 V is applied. Here, the decrease in peel adhesion is sufficient for debonding or adhesive splitting to occur, thereby achieving debonding or adhesive splitting between the layer D of adhesive and the substrate A or carrier layer T.

The expression "Ionic liquid" as used herein means a salt which is liquid at the temperature at which it is used. Typical ionic liquids have an organic cation and an organic anion. The ionic liquid is distinguished from the conducting salt according to the present invention in that the latter contain an inorganic cation and inorganic anion and are always solid at temperatures of below 200 °C, preferably 100 °C and lower. It is possible for conducting salts and ionic liquids to contain an organic anion as well. It can also be a mixture of ionic liquids. In the context of the present invention, in principle all ionic liquids are suitable. Preferably, ionic liquids with higher electrochemical windows and lower ion conductivities.

Preferred ionic liquids are liquid at temperatures of -30 °C to 100 °C. They may always contain organic cation and either organic or inorganic anion. ILs can also be used as a mixture of different ionic liquids. There are many routes of ionic liquid synthesis, including carbonate-based ionic liquid synthesis (CBIL), which offers almost halide-free (<5 ppm) ionic liquids. The purity is important as such traces change the physio-chemical properties of ILs, especially reducing their electrochemical stability [Pure Appl. Chem. 2000, 72, 2275; J. Phys. Chem. C 2020, 124, 20309].

The ionic liquids used in the context of the present invention contain at least one anion and at least one cation. It is also conceivable here for the ionic liquid to comprise two or more types of anions and/or two or more types of cations. It is conceivable, further, for two or more different ionic liquids to be added to the layer D of adhesive, meaning that the layer D of adhesive then contains two or more different ionic liquids.

According to preferred embodiments, the cation of the one or more ionic liquids is selected from the group consisting of imidazolium-based cations, pyridinium-based cations, pyrrolidinium-based cations, piperidinium-based cations, phosphonium-based cations, sulfonium-based cations, morpholinium-based cations, ammonium-based cations, and a combination thereof.

Preferred organic cations include imidazolium-based cations, especially 1,3-substituted imidazolium cations, wherein the substituents in 1,3-positions are selected from a group R, which on each occurrence, identically or different, is H, an straight-chain alkyl group having 1 to 40 carbon atoms or an alkenyl or alkynyl group having 2 to 40 carbon atoms or a branched or cyclic alkyl group having 3 to 40 carbon atoms, where in each case one or more non-adjacent CH₂ groups may be replaced by R'C=CR', C=C, C=O, SO, SO₂, NR', O, S, COOR', or CONR', and where one or more H atoms may be replaced by D, F, Cl, Br or I, wherein R' stands on each occurrence, identically or differently, for H, D, F, Cl, Br, I, CN, OH, NH₂, a straight-chain alkyl, alkoxy or thioalkyl group having 1 to 20 C atoms or branched or cyclic alkyl group having 3 to 20 C atoms, where in each case one or more non-adjacent CH₂ groups may be replaced by SO₂, O, NH, S and where one or more H atoms may be replaced by D, OH, F, Cl, Br or I, and the groups R and R' or R' and R' may form a ring and not more than one R is H.

Examples for straight-chain, branched or cyclic alkyl groups are methyl, ethyl, n-propyl, i-propyl, n-butyl, i-butyl, s-butyl, t-butyl, 2-methylbutyl, n-pentyl, s-pentyl, cyclopentyl, neopentyl, n-hexyl, cyclohexyl, neohexyl, n-heptyl, cycloheptyl, n-octyl, cyclooctyl, 2-ethylhexyl, 2-methoxyethyl.

Examples for alkenyl groups are ethenyl (vinyl), propenyl (allyl), butenyl, pentenyl, cyclopentenyl, hexenyl, cyclohexenyl, heptenyl, (meth)acryl, preferably propenyl (allyl). Preferred groups for R are methyl, ethyl, n-propyl, i-propyl, n-butyl, i-butyl, s-butyl, t-butyl, 2-methoxyethyl, 2-methylbutyl, n-pentyl, s-pentyl, cyclopentyl, neopentyl, n-hexyl, cyclohexyl. From alkyl groups straight-chain alkyl groups like methyl, ethyl, n-propyl, n-butyl, n-pentyl, n-hexyl are preferred.

Further preferred for organic cations are ammoniums, especially ammonium-based cations with the formula NR₄⁺, wherein R is defined as above.

Further preferred for organic cations are pyridinium-based cations, wherein the substituent on the nitrogen is a group R as defined above.

Further preferred for organic cations are pyrrolidinium-based cations, wherein the substituents on the nitrogen are each a group R as defined above.

Further preferred for organic cations are piperidinium-based cations, wherein the substituents on the nitrogen are each a group R as defined above.

Further preferred for ionic liquids are sulfonium-based cations, especially for the formula SR₃⁺, wherein R is defined as above.

Further preferred for ionic liquids are phosphonium-based cations, especially for the formula PR₄⁺, wherein R is defined as above.

Examples for preferred organic cations are 1,3-dialkylimidazoliums, such as 1-ethyl-3-methylimidazolium (EMIM), 1-methyl-3-propylimidazolium (PMIM), 1-butyl-3-methylimidazolium (BMIM), 1-hexyl-3-methylimidazolium, 1-octyl-3-methylimidazolium, 1-allyl-3-methylimidazolim (AllylMIM), 1-ethyl-3-vinylimidazolium (EVIM), 1,3-dimethylimidazolium (DiMIM) 1,3-diethylimidazolium (DiEIM), 1-(2-methoxyethyl)-3-methylimidazolium (MeOEMIM), 1-ethylimidazolium (EIM), 1-ethyl-2,3-dimethylimidazolium (EDiMIM); ammoniums, such as N-butyl-N,N,N,-trimethylammonium, N,N,N,N,-tetrabutylammonium, hexyl-trimethyl ammonium, N-(2-hydroxyethyl)-N,N,N,-trimethylammonium, N-(2-methoxyethyl)-N,N,N,-triethylammonium,, N,N-diethyl-N-methyl-N-heptylammonium, and N,N-diethyl-N-methyl-N-(6-hydroxyhexyl)ammonium; pyridiniums, such as N-methylpyridinium, N-ethylpyridinium, N-butylpyridinium, N-pentylpyridinium, N-hexylpyridinium (HexPy), 1-Butyl-4-methylpyridinium and 1-propyl-4-methylpyridinium (Pro4Pic), 1-ethyl-4-methylpyridinium (Et4Pic), 2-methyl-1-propylpyridinium (Pro2Pic); pyrrolidinium, such as N,N-dimethylpyrrolidinium, N-methyl-N-ethylpyrrolidinium, N-methyl-N-propylpyrrolidinium (Pyr₁₃) and N-methyl-N-butylpyrrolidinium (Pyr₁₄); piperidiniums, such as methyl-propyl-piperidinium, buthyl; and phosphoniums, such as tetrabutylphosphonium, triethyloctylphosphonium, tributyloctylphosphonium, and trihexyltetradecylphosphonium; sulfoniums, such as diethylmethylsulfonium (S122), trietehylsulfonium (S222). In particular, an imidazolium cation having an alkyl group in the side chain, such as 1,3-dialkylimidazolium, is preferably used.

In dialkylimidazolium having an alkyl group in the side chain, shortening the alkyl group improves the conductivity of the lithium ions. Thus, 1-ethyl-3-methylimidazolium (abbreviated as EMIM) is particularly preferably used.

The anion of the one or more ionic liquids can be selected from the group comprising Cl⁻, Br⁻. I⁻, BF₄⁻, ⁻OAc, CN⁻, SCN⁻, CF₃SO₃⁻ (OTf, Triflate), [CF₃SO₂)₂N]⁻ (TFSI or BTA, bis(trifluoromethylsulfonyl) imide), [(FSO₂)₂N]⁻ (FSI, bis(fluorosulfonyl) imide), C(CN)₃⁻ (tricyanomethanide, TCM), CH₃CH₂OSO₃⁻ (EtSO₄, ethylsulfate), PF₆⁻, CH₃OSO₃⁻ (OMs, methylsulfate), CH₃C₆H₄SO₂⁻ (⁻Ots, tosylate), N(CN)₂⁻ (DCA, dicyanamide), HSO₄⁻ (hydrogensulfate), CH₃SO₃⁻ (methanesulfonate), (C₄H₉O)₂PO₂⁻ (dibutyl phosphate), (C₂H₅O)₂PO₂⁻ (diethyl phosphate), NO₃⁻ (nitrate), CF₃CF₂SO₃⁻ (1,1,2,2-tetrafluoroethanesulfonate), C₄F₉SO₃⁻ (perfluorobutanesulfonate), CH₃OCO₂⁻ (methylcarbonate), CₑH₁₄N₂O₂⁻ (lysinat), C₂H₅COO⁻ (propionate), C₇H₇SO₃⁻ (tosylate), CF₃COO⁻ (trifluoroacetate), FeCl₄⁻ (tetrachloroferrate), SbF₆⁻ (hexafluoroantimonate), AlCl₄⁻ (tetrachloroaluminate), and GaCl₄⁻ (tetrachlorogallate).

In a further embodiment of the invention, the ionic liquid is preferably selected from the group comprising 1-ethyl-3-methylimidazolium bis(fluorosulfonyl) imide (designated as EMIM FSI), 1-ethyl-3-methylimidazolium bis(trifluoromethanesulfonyl) imide (designated as EMIM TFSI), 1-butyl-3-methylimidazolium bis(trifluoromethylsulfonyl) imide (designated as BMIM TFSI), 1-ethyl-3-methylimidazolium thiocyanate (designated as EMIM SCN), 1-ethyl-3-methylimidazolium dicyanamide (designated as EMIM DCA), 1-ethyl-3-methylimidazolium tetrafluoroborate (EMIM BF₄), 1-butyl-3-methylimidazolium tetrafluoroborate (BMIM BF₄), 1-allyl-3-methylimidazolium dicyanamide (AllylMIM DCA), 1-allyl-3-methylimidazolium bis(trifluoromethylsulfonyl) imide (AllylMIM TFSI), 1-ethyl-3-vinylimidazolium bis(trifluoromethylsulfonyl) imide (EVIM TFSI), N-methyl-N-propylpyrrolidinium bis(trifluoromethanesulfonyl) imide (Pyr₁₃ TFSI), and N-methyl-N-propylpyrrolidinium bis(fluorosulfonyl) imide (Pyr₁₃ FSI), N-butyl-N-methylpyrrolidinium bis(fluorosulfonyl) imide (Pyr₁₄ FSI), 1-butyl-3-methylpyrrolidinium bis(trifluoromethylsulfonyl) imide (Pyr₁₄ TFSI), 1-butyl-1-methylpyrrolidinium dicyanamide (Pyr₁₄ DCA), 1-butyl-1-methylpyrrolidinium triflate (Pyr₁₄ OTf), 1-Ethyl-3-methylimidazolium triflate (EMIM OTf), 1-butyl-3-methylimidazolium triflate (BMIM OTf), 1,3-dimethylimidazolium bis(trifluoromethylsulfonyl) imide (DiMIM BTA), 1-butyl-3-methylimidazolium tricyanomethanide (BMIM TCM), 1-butyl-3-methylimidazolium methyl sulfate (BMIM MeSO₄), 1,3-diethylimidazolium bis(trifluoromethylsulfonyl) imide (DiEIM TFSI), N-butyl-N-methylpyrrolidinium tricyanomethanide (Pyr₁₄ TCM), diethylmethylsulfonium bis(trifluoromethylsulfonyl) imide (S122 TFSI), 1-propyl-4-methylpyridinium bis(trifluoromethylsulfonyl)imide (Pro4Pic TFSI), 1-Ethyl-3-methylimidazolium ethyl sulfate (EMIM EtSO₄), triethylsulfonium bis(trifluoromethylsulfonyl) imide (S222 TFSI), 1-(2-methoxyethyl)-3-methylimidazolium bis(trifluoromethylsulfonyl) imide (MeOEMIM TFSI), 1-methyl-3-propylimidazolium bis(trifluoromethylsulfonyl) imide (PMIM TFSI), 1-butyl-1-methylpyrrolidinium bis(trifluoromethylsulfonyl) imide (Pyr₁₄ TFSI), 1-butyl-4-methylpyridinium bis(trifluoromethylsulfonyl) imide, 1,3-Dimethylimidazolium methyl sulfate (DiMIM MeSO₄), 1-ethylimidazolium bis(trifluoromethylsulfonyl) imide (EIM TFSI), 1-ethyl-3-methylimidazolium methanesulfonate (EMIM OMs), 1-ethyl-4-methylpyridinium bis(trifluoromethylsulfonyl) imide (Et4Pic TFSI), 1-ethyl-2,3-dimethylimidazolium bis(trifluoromethylsulfonyl) imide (EDiMIM TFSI), 2-methyl-1-propylpyridinium bis(trifluoromethylsulfonyl) imide (Pro2Pic TFSI), 1-Ethyl-3-methylimidazolium acetate (EMIM OAc), 1-Ethyl-3-methylimidazolium hexafluorophosphate (EMIM PF₆), 1-Butyl-3-methylimidazolium hexafluorophosphate (BMIM PF₆), 1-Hexylpyridinium bis(trifluoromethylsulfonyl)imide (HexPy TFSI).

The ionic liquid is preferably a colourless to slightly yellowish liquid depending upon purity or chemical structure.

In a preferred embodiment, the anion of the ionic liquid is different than the anion of the conducting salt used. This prevents the formation of an equilibrium between these salts. This achieves particularly good characteristics with regard to the object to be achieved.

In an alternative embodiment, the anion of the ionic liquid is the same as the anion of the conducting salts. This embodiment also achieves good characteristics with regard to the object to be achieved but the ion conductivity may be slightly reduced.

In another embodiment, the preferred ionic liquid has higher electrochemical windows and lower ion conductivity.

### Further additives

Optionally, the adhesive composition of the present invention may be prepared by polymerizing a mixture further comprising additives as component h) of the mixture such as crosslinker, salt of acrylate, plasticizer, antioxidant, tackifier, corrosion inhibitor, oxygen scavenger, water, and a combination thereof, preferably in an amount of 0.01 wt % to 10 wt %, based on the total weight of the mixture.

In a further embodiment of the invention, the adhesive composition may be prepared by polymerizing a mixture further comprising water as an optional additive. The presence of small amounts of water may be required to activate the debonding function as described in the present disclosure. Generally, the compounds (e.g., Li salt, monomers, etc.) used for preparing the mixture forming the basis for the adhesive composition already contain traces of water. In addition, water is also taken up into the mixture upon its preparation and to the adhesive composition upon its use. In other words, the mixture and the adhesive composition always contain a certain amount of water.

However, adjusting the amount of water to 0.01 wt % to 10 wt %, preferably 0.5 to 5 wt % may further improve the debonding properties. The amount of water in the mixture may be varied depending on the type of ionic liquid used. That is, when a low conductive ionic liquid is used, a larger amount of water may be required than when a high conductive ionic liquid is used. On the other hand, the amount of water in the mixture and the adhesive composition is preferably 10 wt % or less, more preferably 5 wt % or less to avoid hydrolysis of the conducting salts (e.g., Li salts) and the ionic liquid. The mixture and the adhesive composition are therefore preferably stored under dry conditions.

Water can activate the debonding function since it generally makes the adhesive softer by providing a certain flexibility to the polymer chains and allows ionic liquid to move faster by improving polymer chain dynamics, resulting in debonding. Similar effects are achieved by the addition of plasticizers (as described in detail below) to the mixture. Accordingly, in the present disclosure, when water is added to the mixture forming the basis for the adhesive composition, it may also be referred to as plasticizer.

In a further embodiment of the invention, the adhesive composition may be prepared by polymerizing a mixture further comprising 0.01 wt % to 10 wt %, preferably 0.5 to 5 wt % of plasticizer, as an optional additive. When the mixture forming the basis for the adhesive composition comprises a conventional plasticizer within above ranges, the presence of water can be avoided while debonding properties can still be achieved. As explained above with respect to the presence of water, the amount of plasticizer in the mixture may be varied depending on the type of ionic liquid used. That is, when a low conductive ionic liquid is used, a larger amount of plasticizer may be required than when a high conductive ionic liquid is used.

Conventional plasticizers that may be used in the present invention include, for example, cyclic carbonates such as ethylene carbonate (EC), vinylene carbonate (VC), propylene carbonate (PC), butylene carbonate (BC) or fluoroethylene carbonate (FEC), linear carbonates such as dimethyl carbonate (DMC), diethyl carbonate (DEC) or ethyl methyl carbonate (EMC), mixed carbonates, dimethylacetamide, ethyl methanesulfonate (EMS), gamma-butyrolactone, dimethyl sulfoxide, polyethylene oxide (PEO, also referred to as polyethylene glycol) i.e. PEG), "glymes" such as diglyme, triglyme, tetraglyme, ethylene glycol diacetate, ketones, or various ethers or polyethers, polypropylene oxides or block copolymer thereof, trimethylolpropane ethoxylate, or mixtures thereof. Particular preference in the present invention is given to the use of plasticizers that are based on polyethylene oxides, polypropylene oxides or block copolymers thereof, trimethylolpropane ethoxylate, or glymes.

The polyethylene oxides preferably have hydroxyl, (meth)acrylate, methoxy or ethoxy groups as chain ends. In the case of (meth)acrylate, polyethylene oxides with only one (meth)acrylate chain end are preferred. It is also possible to use mixtures of PEOs with and without (meth)acrylate chain ends. The chain end or chain ends with no (meth)acrylate groups are preferably hydroxy groups. Methoxy groups may further improve conductivity, and hydroxy groups may further improve adhesion strength to the substrates.

PEOs with (meth)acrylate groups function as monomers and will be copolymerized with monomers (a1) and (a2). This introduces long PEO chains as side groups into the polymer. In preferred embodiments, the chain length of the PEOs used is between 5 to 20 preferably 5 to 12 which corresponds to the number of consecutive ethylene oxide (-O-CH₂-CH₂-) repeat units in the polymer chain. An example of polymerizable PEOs is PEGMA480 and unpolymerizable is PEG200.

In preferred embodiments, the plasticizer is not selected from cyclic carbonates such as ethylene carbonate (EC), vinylene carbonate (VC), propylene carbonate (PC), butylene carbonate (BC) or fluoroethylene carbonate (FEC), linear carbonates such as dimethyl carbonate (DMC), diethyl carbonate (DEC) or ethyl methyl carbonate (EMC), mixed carbonates, dimethylacetamide, ethyl methanesulfonate (EMS), gamma-butyrolactone, dimethyl sulfoxide. Especially EC or DEC are flammable (low flash point), volatile and also sensitive to moisture. This makes the composition more dangerous and harder to process. These ingredients are also smelly.

All the stated plasticizers may typically improve the solubility during the polymerization and, at the same time, act as an integral constituent of the final electrolyte. Adding plasticizer may increase softness of the adhesive, which reduced peel adhesion.

The mixture may comprise further ingredients like heteroaromatic substances like triazine. Such substances may help to improve the conductivity of the electrolyte.

The salt of acrylate may in principle be any type of salt of acrylate known to the skilled person. Exemplary salts of acrylate described herein may include but are not limited to sodium acrylate, potassium acrylate, lithium acrylate and ammonium acrylate.

In order to optimize the technical adhesive properties, it is furthermore possible to admix the adhesive composition of the present invention, i.e. PSAs, with resins. Resins are considered for the purposes of this present invention typically to be small molecule compounds to oligomeric and polymeric compounds having number-average molecular weights Mₙ of not more than 10 000 g/mol; they are not included in the polymer component. Tackifying resins for addition (peel adhesion-enhancing resins, i.e. tackifier) that can be used include all existing tackifier resins and those described in the literature. Representatives include the pinene resins, indene resins and rosins, their disproportionated, hydrogenated, polymerized, and esterified derivatives and salts, the aliphatic and aromatic hydrocarbon resins, terpene resins and terpene-phenolic resins, and also C₅ to C₉ and other hydrocarbon resins. Any desired combinations of these and further resins may be used in order to adjust the properties of the resultant adhesive in line with requirements. Generally speaking, it is possible to use any resins or rosins which are compatible with (soluble in) the corresponding base polymer; reference may be made more particularly to all aliphatic, aromatic and alkylaromatic hydrocarbon resins, hydrocarbon resins based on pure monomers, hydrogenated hydrocarbon resins, functional hydrocarbon resins, and natural resins or hydrogenated rosins like methyl ester of hydrogenated rosin.

With the acrylate-based, adhesive composition used typically in the present invention, there is no need for the presence of tackifier resins, and so one outstanding variant constitutes the adhesive composition of the present invention wherein no resins have been added to the PSA. Such additions frequently possess adverse effects in the context of application for optical bonds. The resins used in the prior art as tackifier resins for acrylate PSAs are usually polar in nature, in order to achieve compatibility with the polyacrylate matrix. This usually leads to the use of aromatic tackifier resins, which on prolonged storage or on light exposure are subject to a yellowish discoloration.

Depending on the application, e.g. if no optical clarity is needed, tackifier resins may be used, preferably in a low range, preferably 0 to 5 wt %, more preferably 0.1 to 2 wt %.

In order to prevent corrosion to the electrically conductive substrate A or substrate B or carrier layer T (backing), different inorganic or organic additives, such as acrylic acid, LiBOB, LiDFOB, silica nanoparticles, antioxidant and trimethylsilyl (trimethylsiloxy) (bis-TMSA) acetate, preferably in an amount of 0.1 to 5 wt %, may be used. Corrosion inhibitors or oxygen scavengers may also be used.

### Crosslinkers

In another embodiment of the invention, the adhesive composition of the present invention may be prepared by polymerizing a mixture comprising the aforementioned UV syrup further comprising a crosslinker as optional additive.

The liquid electrolyte may be crosslinked with crosslinking polyfunctional acrylates, these being molecules possessing more than one acrylate group. Suitable examples include hexanediol diacrylate (HDDA), ethoxylated trimethylolpropane triacrylate (ETPTA), 1,9-nonanediol dimethacrylate, 1,6-hexanediol dimethacrylate, di(trimethylolpropane) tetraacrylate, di(ethylene glycol) diacrylate (Di(EG)DA), bis(2-methacryloxyethyl) phosphate, di(ethylene glycol) trimethacrylate (Di(EG)DM), bisphenol A bis(2-hydroxypropyl)acrylate, ethylene glycol dimethacrylate (EGDM), dipropylene glycol diacrylate, trans-1,4-cyclohexanediol dimethacrylate, (Di(PG)DA), 1,3-glyceryl dimethacrylate, 1,10-decanediol dimethacrylate, dipropylene glycol dimethacrylate (Di(PG)DM), 1,4-diacryloylpiperazine, ethylene glycol divinyl ether (EGDVE), diethylene glycol diacrylate, diethylene glycol divinyl ether (Di(EG)DVE), diethylene glycol dimethacrylate, triethylene glycol dimethacrylate (tri(EG)DM), ethylene glycol diacrylate, dipentaerythritol pentaacrylate (DPentA), trimethylolpropane triacrylate (TMPTA), propoxylated trimethylolpropane triacrylate (PO3-TMPTA), propoxylated trimethylolpropane triacrylate (PO6-TMPTA), polyethylene glycol) diacrylate (PEDGA) and polyethylene glycol trimethacrylate.

In case all the functional groups are reacted, protic groups can also be used for crosslinking. In that case the following crosslinkers and crosslinking systems are also suitable: isocyanate crosslinkers, epoxy-based crosslinkers, melamine-based crosslinkers, peroxide-based crosslinkers, metal chelate-based crosslinkers, metal salt-based crosslinkers, carbodiimide-based crosslinkers, oxazoline-based crosslinkers, aziridine-based crosslinkers, amine-based crosslinkers or silane-based crosslinkers. A combination of different crosslinkers is likewise possible.

Where a difunctional crosslinker is used, it may be present in the adhesive composition of the present invention in an amount of 0.2 to 10 wt %, more preferably 0.5 to 3 wt %, based on 100 wt % of the polymer component. Where a trifunctional crosslinker is used, it may be present in the adhesive composition of the present invention in an amount of 0.02 to 5 wt % based on 100 wt % of the polymer component, more preferably 0.05 to 1 wt %. It is also possible, however, to use crosslinkers with higher functionality. Furthermore, a plurality of crosslinkers may be used, which in terms of their functionality may be the same or different (for example, a combination of difunctional and trifunctional crosslinkers). The amounts used ought then to be adapted advantageously.

In preferred embodiments, the mixture contains no crosslinker or crosslinking initiator.

### Solvents

In accordance with the present specification, the mixture forming the basis for the adhesive composition may comprise, as an additional compound, a solvent, for example if (as described in further detail below) solution polymerization is used for producing the adhesive composition or adhesive tape of the present invention. The solvent optionally present in the mixture has a boiling point below 100 °C (at atmospheric pressure, i.e. 1013 mbar). Solvents with a boiling point at 1013 mbar of 100 °C or more, and solvents which do not boil point at 1013 mbar but decompose at 100°C or more, are considered as plasticizers for the purposes of the present specification.

Solvents used for polymerizing the polymer matrix of the adhesive or as assistants for the blending of the polymer matrix with further components and additives may be, for example dry ethyl acetate. The electrochemical stability towards oxidation of this solvent lies between that of diethyl carbonate (DEC) and the more stable cyclic ethylene carbonate (EC), and it can be dried very quickly and with a low level of energy consumption. The presence of ethyl acetate additionally improves the low-temperature properties in terms of ion conduction. However, other solvents can also be used and include, for example, acetonitrile, 1,3-dioxolane, dimethoxyethane, ketone or ethylene glycol dimethyl ether. All the stated solvents may also simultaneously be solvents in the polymerization and an integral constituent of the final electrolyte.

For safety reasons (odour, flammability, processability), however, it is often desirable not to have any volatile solvents in the mixture, especially when the electrochemical system is situated between two film substrates as in the case of electrochromic systems, rather than being encapsulated, as is usual with batteries, in aluminum housings or other housings of significant stability. In this case, the solvent can be removed from the present invention after the coating of the adhesive composition, e.g., by drying in a drying tunnel. Alternatively, the polymer matrix may be produced using a solvent-free polymerization process such as UV syrup polymerization (described in further detail below). It is preferred to use solvent-free polymerization in the production of the adhesive composition of the present invention.

If the polymer matrix has been produced by polymerization in a solvent, there are known methods for drying or concentrating the polymer-solvent mixture, for example by concentration in an extruder. In this way the effect on side reactions caused by residual solvent after the concentration or drying is limited.

The adhesive composition of the present invention and the mixture forming the basis for the adhesive composition are preferably free of solvents.

### Polymers

The aim of the present invention is to provide an adhesive composition, preferably a pressure-sensitive adhesive composition, which through ion conduction has a very good electrolyte function. Pressure-sensitive adhesives (PSAs) are, in particular, as described above, polymeric compositions which - where appropriate through suitable addition of further components such as tackifier resins - are permanently tacky or sticky and permanently adhesive at the application temperature (room temperature unless otherwise defined) and adhere to a multiplicity of surfaces on contact, in particular adhere instantaneously (referred to as having "tack", i.e. stickiness or touch-stickiness). They are capable of wetting a substrate to be bonded, even at the application temperature, without any activation by solvent or by heat, though customarily under the influence of a greater or lesser pressure, to a degree sufficient to allow interactions between the adhesive and the substrate sufficient for adhesion. The essential influencing parameters in this regard include pressure and also contact time. The particular properties of the pressure-sensitive adhesives are derived, among other properties, particularly from their viscoelastic properties.

Pressure-sensitive adhesives comprise one or more polymers (for the purposes of the present disclosure, the polymers are referred to collectively as the "polymer component" of the PSA), which may be homopolymers and/or copolymers of different monomers polymerizable with one another. The polymer components may already have pressure-sensitive adhesive properties by themselves, or they may acquire such properties only after suitable addition, for example of resins.

In principle, the polymer component may be prepared on the basis of polymers of different chemical nature, i.e. types. In other words, the pressure-sensitive adhesive properties may be influenced by factors including the nature and proportion of the monomers used when polymerizing the PSA's parent polymers, the average molar mass and molar-mass distribution thereof, and the nature and amount of the additives to the PSA, such as tackifier resins, plasticizers and the like. During polymer preparation, moreover, crosslinkers may be used, typically with a fraction of 0.05 wt % to 5 wt %, preferably 0.1 wt % to 3 wt %. Sometimes a chain-transferring agent like dodecyl mercaptan may also be employed to regulate the polymer's molecular weight.

In order to attain the viscoelastic properties, the monomers on which the PSA's parent polymers are based, and also any further components present in the PSA, may be selected more particularly such that the PSA has a glass transition temperature (according to DIN 53765) below the temperature of use (that is, usually below room temperature).

Through suitable cohesion-boosting measures, such as crosslinking reactions (formation of bridge-forming links between the macromolecules), for example, it is possible to expand and/or shift the temperature range within which a polymer composition exhibits pressure-sensitive adhesive properties. The range of application of the PSAs may therefore be optimized by an adjustment between flow ability and cohesion of the composition.

According to further preferred embodiments, the adhesive of the layer D of adhesive is a pressure-sensitive adhesive and the layer D of adhesive is therefore a layer D of pressure-sensitive adhesive. According to further preferred embodiments, the adhesive of the layer C of adhesive is a pressure-sensitive adhesive, and the layer C of adhesive is therefore a layer C of pressure-sensitive adhesive. In the embodiments in which both the layer D of adhesive and the layer C of adhesive are layers of pressure-sensitive adhesive, the adhesive tape of the invention is a pressure-sensitive adhesive tape.

In accordance with the present invention, the adhesive composition of the present invention is prepared by polymerizing a mixture comprising at least one polyacrylate, i.e., poly(meth)acrylate. A "poly(meth)acrylate" is a polymer obtainable by polymerizing acrylic and/or methacrylic monomers and optionally further copolymerizable monomers. In the present invention, the poly(meth)acrylate is prepared by polymerizing the monomers described in detail above, namely the acrylate monomer (a1) from the group of the (meth)acrylic esters containing at least one oxygen atom, the acrylate monomer (a2) from the group of the (meth)acrylic esters or amides containing at least one nitrogen atom, and optionally further one or more acrylate monomers (a3). The term "(meth)acrylic esters" embraces not only methacrylic esters but also acrylic esters. Preferably, the poly(meth)acrylate is polymerized by free radical polymerization of the monomers used, according to polymerization processes which are known per se.

The layer C of adhesive according to preferred embodiments of the present invention, is poly(meth)acrylate-based, like the layer D of adhesive. This is subject to all of the above statements regarding the definition and the nature and amount of poly(meth)acrylate-based and poly(meth)acrylates, respectively.

According to preferred embodiments, the poly(meth)acrylate used in the layer C of adhesive is the same as in the layer D of adhesive. As a result, in particular, similar substrates, identified in the present disclosure as substrates A and B, may be bonded to one another.

High molecular weight polyethylene oxide (PEO) which forms complexes with Li salts is most preferably used as polymer matrix (although the oxidative electrochemical stability is limited to 3.8 V versus Li/Li⁺. However, polymers based on polyvinyl chloride (PVC) and acrylates are also very suitable. Poly(vinylidene fluoride/trifluoroethylenes) or poly(vinylidene fluoride/hexafluoropropylene) in a blend with polyethylene oxide or polyethylene oxide/polyacrylonitrile (PEO/PAN) blends are likewise suitable. Acrylates with ethylene oxide (EO) units in the side chains have a higher electrochemical stability. Additionally suitable are copolymers of vinyl chloride, acrylonitrile, methyl methacrylate, ethylene oxide, propylene oxide, epichlorohydrin, vinylidene chloride, vinylidene fluoride, ethylene succinate and hexafluoropropylene. Copolymers of vinylidene fluoride and hexafluoropropylene are frequently also used as binders for the active materials.

According to preferred embodiments, polymers based on acrylates are especially suitable, as they have high transparency, excellent adhesion to different surfaces, easy to select monomers with different functional groups for versatile applications, better Li salts solubility and weathering resistance to be achieved.

The polymers of the polymer component are typically based to an extent of at least 70 wt %, for example 70 to 90 wt %, on one or more (meth)acrylate monomers. The acrylate monomers used are typically as defined for the first aspect of the present invention. In accordance with the present invention, the polymer component used may, alternatively or additionally to the poly(meth)acrylate, comprise other polar polymers, such as, for example, specially modified polyesters, polyurethanes, or polyurethane acrylates.

The hydrocarbon part of the alcohol component of the acrylate monomer used preferably in the present invention may be branched, unbranched or cyclic, saturated, or unsaturated, aliphatic or aromatic, substituted or unsubstituted, preferably it is branched, unbranched or cyclic, saturated or unsaturated, and aliphatic since aromatic groups may cause colour.

The pressure sensitive adhesive composition described in accordance with the present invention in the present disclosure is outstandingly suitable, moreover, for use as optically clear adhesive tape in display units of electronic devices (displays), particularly as a pressure sensitive adhesive composition in adhesive tapes.

### Conducting salt

The adhesive composition of the present invention is prepared by polymerizing a mixture comprising one or more of a conducting salt as component f) of the mixture. Accordingly, the layer D or C of the adhesive composition of the present invention both contain a certain amount of conducting salts. When the salts are dissolved in the mixture, i.e., comprising UV syrup along with other components, the mixture becomes a liquid electrolyte upon dissolution, thereby facilitating better solubility of the one or more electro-responsive compounds, preferably zwitterionic monomers, and more importantly, enabling the adhesive to be highly responsive to the electric field.

Common conducting salts, such as lithium salts, are used at high concentrations of 1 mol/L for different electrochemical applications such as batteries. Surprisingly, the amount of salt required in the adhesive composition of the present invention is much lower.

The conducting salt according to the present invention is selected based on its solubility in the mixture, cost, safety handling and long-term stability. For example, lithium bis(trifluoromethylsulfonyl)imide (LiTFSI) is considered to demonstrate improved moisture resistance. Lithium bis(fluorosulfonyl)imide (LiFSI) or Lithiumtriflate (LiOTf), lithium difluoro(oxalato)borate (LiDFOB), or lithium bis(oxalato)borate (LiBOB) can also be used.

It is also possible to use other cations, such as Na⁺, K⁺, Cs⁺, Rb⁺, Ag⁺, Cu⁺, Cu²⁺, Mg²⁺, NH₄⁺ and other anions, such as Cl⁻, Br⁻, I⁻, ClO₄⁻, OH⁻, SCN⁻, AsF₆⁻, [(CF₃SO₂)₂N]⁻, [(FSO₂)₂N]⁻, CF₃SO₃⁻ , CH₃CO₂⁻, [B(C₂O₄)₂]⁻, [BF₂(C₂O₄)₂]⁻, PF₆⁻, BF₄⁻, [PF₃(CF₂CF₃)₃]⁻ (FAP), C₂O₄²⁻, and C(CF₃SO₂)₃⁻, in pure form or in a mixture. An anion such as PF₆⁻ is not preferred since they form toxic and corrosive gases such as HF on reaction with moisture.

The conducting salt can also be a mixture of two or more conducting salts, which may be beneficial for preventing corrosion of the conductive substrate, e.g., substrate A, substrate B and/or carrier layer T.

According to preferred embodiments, the conducting salt is present in an amount of 0.1 wt % to 20 wt %, preferably 1 wt % to 10 wt %, more particularly 3 wt % to 8 wt %, based on the total weight of the mixture forming the basis for the adhesive composition of the present invention.

### METHODS FOR PRODUCING ADHESIVE COMPOSITION

In particular, solution polymerization and solution coating, UV polymerization and extrusion are suitable as possible methods for producing the adhesive composition of the present invention.

In solution polymerization, the polymer is produced in a solvent (as described above) and additives are added either before or during the polymerization or else are added to the polymer solution after the polymerization. The polymer solution is then coated onto a web of release paper, and the solvent is partially or fully removed by drying to prepare the adhesive composition.

UV bulk polymerization has proven to be particularly advantageous and more sustainable due to solvent-free technology. Extensive research has shown that, as with other monomers, in the case of UV polymerization in bulk, this effect does not adversely affect the optical appearance of the electrolyte web. 2-(2-Ethoxyethoxy)ethyl acrylate (EEEA, also known as EDGA) and DMAA are therefore particularly preferably used in producing the adhesive composition of the present invention by UV bulk polymerization.

Surprisingly it has been found that the conducting salt is already soluble in monomer (a1), while the presence of monomer (a2) increases the adhesion of the resulting adhesive composition. Moreover, the glass transition temperature (T_{g}) of the adhesive can be easily controlled by controlling the weight percentage of (a2) monomer. For example, increasing the (a2) monomer content also increases the T_{g} of the adhesive, resulting in a stiffer but less sticky adhesive.

In preferred embodiments, the final UV polymerization / web polymerization is performed using a dosage high enough to ensure a high conversion (e.g., polymerization) of the monomers. If the amount of free monomers is low in the final adhesive composition or tape, the long-term stability is increased, since no reactive groups are present in the adhesive composition. Besides, unreacted monomers can be a health or environmental concern.

In preferred embodiments, the adhesive composition of the present invention is prepared in a two-step process. In particular, the two-step process described herein refers to: (i) the provision of a mixture, including UV syrup preparation and liquid electrolyte formulation, followed by (ii) polymerization, including curing by UV web polymerization or UV polymerization in order to obtain the adhesive composition of the present invention.

The first step (i) of preparing the adhesive composition according to the preferred embodiment, also referred to as the provision of a final mixture forming the basis for the adhesive composition of the present invention, distinguishes between UV syrup preparation and liquid electrolyte formulation. If an initiator is used in both UV syrup preparation and liquid electrolyte formulation, the combined weight ratios of initiator are added up in relation to the total weight of the adhesive composition.

The UV syrup preparation includes the provision of a premixture of components a), b), d) and optionally g) as described above (i.e. monomers (a1), (a2), an initiator and optionally monomer (a3)). This premixture is then UV polymerized to achieve a viscous syrup called UV syrup, preferably with a conversion between 5% to 25%, also referred to as prepolymer hereinafter. Polymerizing monomers (a1), (a2), and optionally (a3) is achieved by adding at least one initiator, preferably at least one photoinitiator, more preferably in an amount of less than 0.5 wt %, further preferably less than 0.1 wt %, and even more preferably less than 0.005 wt %. Preferably, the weight ratio of monomer (a1) to monomer (a2) is between 80:20 and 50:50, more preferably between 75:25 and 55:45, and even more preferably between 70:30 and 60:40, based on the total weight of monomer (a1) and monomer (a2).

The UV syrup is subsequently mixed with the other components c), d), e), f) and optionally h) (such as electro-responsive compound, conducting salt, one or more ionic liquids, preferably room temperature ionic liquid (RTIL), plasticizer and so on). The UV syrup is present with a weight ratio of 70 wt % to 90 wt %, preferably 75 wt % to 85 wt %, based on the total weight of the final mixture forming the basis for the adhesive composition of the present invention.

Once all the components in the final mixture dissolved, a liquid electrolyte is obtained. That said, the preparation of an UV syrup as a prepolymer, in which further components are dissolved, is preferable as it gives the liquid electrolyte a certain viscosity that enables the controlled thickness curing or web polymerization for preparing the adhesive composition of the invention.

If the electro-responsive compounds do not dissolve in the UV syrup, they may first be dissolved in (a3) monomers containing polar groups like hydroxy or carboxy group, as described above, which can then be mixed with other components to obtain the liquid electrolyte. The obtained liquid electrolyte is mostly an optically clear solution. It can also be opaque or cloudy depending on the formulation.

The second step (ii) of curing is performed after coating the liquid electrolyte between a carrier layer T (backing), such as an aluminium-PET backing etc, and/or a siliconized PET liner. After curing the coated liquid electrolyte, the adhesive composition according to the present invention is obtained. Accordingly, when the liquid electrolyte is coated and cured between two easy liners to prepare an adhesive composition, and both liners are removed this is referred to as an adhesive transfer tape (not comprising carrier layer T) throughout the present disclosure. When the liquid electrolyte is coated on a backing and covered by a siliconized liner and cured, after removing only the siliconized liner, the resulting adhesive composition is referred to as single-sided adhesive tape (comprising carrier layer T) throughout the present disclosure.

The curing process is preferably done to a certain extent that the resulting adhesive composition contains as less unreacted monomers as possible, preferably conversion is 95% or higher, more preferably 98% or higher. The curing process may preferably be done via UV polymerization or web polymerization. This is preferably achieved by using UV polymerization with a dose larger than 1000 mWs/cm², preferably between 2000 mWs/cm² to 6000 mWs/cm², more preferably 4100 mWs/cm² to 5000 mWs/cm². By the high dose, the long-term stability of the adhesive composition is improved as well as the release of unreacted toxic monomer is suppressed.

It is worth mentioning that the adhesive composition can also be possible to prepare in a single curing step. In this scenario, multiple monomers from (a1) and (a2) are blended with one or more electro-responsive monomer, conducting salt, ionic liquid (preferably room temperature ionic liquids or RTILs), and a photoinitiator, followed by UV curing. To enhance the solubility of certain electro-responsive monomers and improve the initial bonding strength of the adhesive composition, at least one (a3) monomer, along with one or more crosslinkers, may be incorporated into the mixture.

Preferably, the liquid electrolyte is applied to a liner with a layer thickness of 10 to 500 µm, more preferably of 25 to 250 µm, even more preferably of 50 to 200 µm. As confirmed by the experimental results (cf. below, e.g., present Examples 1 or 2), initial peel adhesion (i.e. peel adhesion without application of voltage prior to the measurement) is generally lower at lower layer thickness. Surprisingly, however, it was found that by applying a voltage to the adhesive composition of the present invention prior to the measurement, this influence of the layer thickness on the peel adhesion achieved can be eliminated. Accordingly, the adhesive composition of the present invention allows to reduce the layer thickness, while maintaining sufficient peel adhesion. This is beneficial not only in terms of material consumption but also allows to shorten the time of voltage application to electrically modify the bonding strength (i.e., bonding, debonding, and rebonding).

As described above, although the embodiments have been described by limited embodiments, various modifications and variations are possible from the above description to those of ordinary skill in the art. For example, it is to be understood that wherever values and ranges are provided herein, all values and ranges encompassed by these values and ranges, are meant to be encompassed within the scope of the present invention. Moreover, all values that fall within these ranges, as well as the upper or lower limits of a range of values, are also contemplated by the present invention. Therefore, other implementations, other embodiments, and those equivalent to the claims also fall within the scope of the appended claims.

### ADHESIVE TAPE DESIGN

The following further illustrates possible configurations of the adhesive tape of the present invention. However, they are in no way a limitation of the teachings or disclosure of the present invention as set forth herein.

According to preferred embodiments, the adhesive tape of the present invention is a pressure-sensitive adhesive tape.

As described above, the adhesive tape of the present invention comprises different structures and may include one or more of a layer D of adhesive or a layer C of adhesive or a combination thereof either in the form of a free-standing tape or in the form of a tape comprising carrier layer T.

For example, the adhesive tape of the present invention may be a single-sided, single-layered adhesive tape. The adhesive tape may preferably comprise a carrier layer T as shown in Fig. 1A. Furthermore, the adhesive tape of the present invention may preferably be a single-layered adhesive transfer tape without a carrier layer T as shown in Fig. 1B. Alternatively, the adhesive tape of the present invention may be a double-sided, single-layered adhesive tape comprising a carrier layer T in the middle as shown in Fig. 1C.

According to certain preferred embodiments, the adhesive tape of the present invention may be a multi-layered single-sided adhesive tape. The adhesive tape may preferably comprise a carrier layer T on one side. For example, the adhesive tape of the present invention may be a single-sided, two-layered (multi-layered) adhesive tape, preferably further comprising a carrier layer T, wherein more preferably the carrier layer T is disposed on only one of the adhesive layers (e.g., layer C of adhesive), but not on the other adhesive layer (e.g., layer D of adhesive) as shown in Fig. 1D. Furthermore, the adhesive tape of the present invention may be a multi-layered adhesive tape, preferably an adhesive transfer tape not comprising a carrier layer T as shown in Fig. 1E.

The layers D, T, and/or C in the different adhesive tape designs may laterally protrude beyond any of the other layers D, T, and C. The expression "laterally protrude" refers in the context of the present invention to any kind of lateral protrusion of the layer or layers in question and means that the particular layer in question extends further, particularly in the "xy" plane and hence laterally - perpendicular to the stack direction - than does the reference layer. In place of the term "lateral protrusion", terms used in the context of the present invention include "lateral extension" or "lateral extension portion". The term "lateral" is referenced here to any direction of extent of the layer plane "xy" perpendicularly to the stack direction of the layers "z". The term is therefore independent in particular of the geometric shape of the adhesive tape in the "xy" plane, which for example may be a rectangle, as is usual for adhesive tapes (see above), or else may be a square or a circle. Minor fluctuations in the dimensions of the individual layers in the "xy" plane, resulting from the die-cutting process or similar shaping processes, are not addressed herewith, in particular since such slight projections of material, in view of the dimensions, are incapable of receiving a voltage applied thereto as planned and they do not imply any additional effort in production, thus being not brought about by means of an additional method step.

A lateral protrusion is preferably in terms of connecting a direct-current (DC) voltage source to any of the layers. For example, when voltage is to be applied to a carrier layer T that comprises only one side coated with a conductive coating on a polymer film, then, sufficient connection of the voltage source to such a carrier may be ensured if the carrier layer protrudes the other layer(s). However, when voltage is to be applied to a double-sided conductive coated polymer film or a completely conductive film, for example a metal foil carrier layer T, sufficient connection of the voltage source to such a layer may also be achieved without any protrusion.

According to an embodiment, the carrier layer T is preferably a conductive carrier layer. In other words, the material of the carrier layer is not particularly limited but preferably electrically conductive. For example, the conductive carrier layer T may be a metalized-polymer film, preferably an aluminum-polymer film. A metalized carrier layer usually comprises a polymer film (e.g., PET) coated with metal particles on one or both sides. For example, silver nanowires or a conductive paint spray may be used, optionally together with a conductive primer. By applying this metal particle coating to a non-conductive polymer substrate, electrical conductivity may be achieved, making the metalized carrier layer an alternative to purely metallic conductive materials such as steel. Poly-3,4-ethylendioxythiophen indium tin oxide (PEDOT-ITO)-coated PET, PEDOT-coated metalized PET, CNT-coated PET or other chemically coated (e.g., chromate coated) metalized PET films can be used as an alternative to a metalized PET. The use of a chemically coated or a metal-free conductive carrier layer such as a conductive carbon-coated film is beneficial to prevent the risk of corrosion of a metal-based carrier layer.

Particularly advantageous in terms of providing an optically clear adhesive tape, are carrier-less adhesive transfer tapes. Especially advantageous are single-layered adhesive transfer tapes, such as shown in Figs. 1B and 2B, which in one most advantageous embodiment consist in the application of the PSA layer on its own (also referred to as adhesive transfer tape herein) and which, for handling, converting and commercial offering beforehand, are provided on one or both sides with a temporary carrier, being wound in particular into a roll. However, when using electrically conductive CNT-coated PET or ITO-coated PET as carrier layer T, optically clear transfer tapes may also be provided with the presence of backing or carrier layer T.

In order to produce such adhesive as transfer tapes, the adhesive composition obtainable as set out above is advantageously coated in the desired layer thickness onto a temporary carrier (made in particular from anti-adhesive and/or anti-adhesively furnished materials, known interchangeably as liner materials, release materials or release liners, such as siliconized papers and polymer films, may also be coated with electrically conductive materials or the like, for example. In principle, it is possible here to use all release materials that are suitable for polyacrylate PSAs. Particularly preferred for use are release liners with a PET carrier core.

It is also possible to use two clear release liners for such transfer adhesive tapes, wherein both release liners differ in their release forces, one liner has a tight release (known as tight liner) and the other has an easy release (known as easy liner), e.g., a siliconized PET liner.

According to certain preferred embodiments, the one or more release liners may be electrically conductive, for example, an aluminium-coated polymer film, which may act as a tight liner.

According to preferred embodiments, in order to obtain an adhesive transfer tape of the present invention, such as shown in Figs. 1B and 2B, the liquid electrolyte may be coated and then cured i.e., via UV web polymerization or curing between two release liners.

According to further preferred embodiments, in order to obtain a single-sided, single-layered adhesive tape of the present invention, such as shown in Figs. 1A and 2A, the liquid electrolyte is directly coated between a carrier layer T and an easy release liner and then subsequently cured.

According to further preferred embodiments, in order to obtain a double-sided, single-layered adhesive tape of the present invention, such as shown in Fig. 1C, both sides of the carrier layer T are coated with the liquid electrolyte and cover with easy release liners and then cured.

According to even further preferred embodiments, in order to obtain a multi-layered adhesive transfer tape or multi-layered, single-sided adhesive tape of the present invention, such as shown in Fig. 1D, the liquid electrolyte corresponding to the layer D or C of adhesive is coated on the carrier layer T and then subsequently cured. Then, the liquid electrolyte corresponding to the layer C or D (i.e. layer C if layer D was coated on layer T in the first step / layer D if layer C was coated on layer T in the first step) of the adhesive is coated directly on the already cured side of layer D or C of adhesive and cured to get multi-layered (D-C or C-D) single-sided tape. Alternatively, both layer D of adhesive and layer C of adhesive can be separately cured between two release liners and then laminated to each other to prepare a single-sided, multi-layered transfer adhesive tape.

According to further preferred embodiments, the adhesive tape of the present invention is provided as a single-sided adhesive tape, preferably an adhesive transfer tape, with one or more adhesive layers containing the adhesive composition of the present invention being already provided or applied on a carrier layer, preferably a conductive carrier layer, for example, a metalized-polymer film (e.g. metalized PET), preferably an aluminum-polymer film (e.g. aluminum-PET), and taking the form of a roll material.

### METHODS FOR MODIFYING ADHESIVE STRENGTH OF ADHESIVE TAPE

According to further preferred embodiments, the adhesive tape of the present invention is a single-sided adhesive tape and has preferably only one layer of the adhesive containing one or more ionic liquids i.e., layer D of the adhesive on carrier layer T (backing) according to the embodiment shown in Fig. 1A. In this configuration, when a conductive substrate A, which is disposed onto a first face of the layer D of adhesive, is connected to the positive terminal of a DC voltage source and the carrier layer T, being on the opposite, i.e. the second, face of the layer D of adhesive, is connected to the negative terminal of the DC voltage source, and when a DC voltage, preferably a DC voltage of 5 to 10 V, is applied, the peel adhesion between the layer D of adhesive and substrate A is increased, thereby achieving bonding between the layer D and substrate A. However, if the connection is reversed, e.g., the negative terminal of the DC voltage source is connected to the substrate A and the positive terminal is connected to the carrier layerT and when a higher DC voltage, preferably a DC voltage above 15 V, more preferably of 15 to 50 V is applied, the debonding of the layer D of adhesive from the substrate A can be achieved. For both cases, the peel adhesion increases with the positive DC voltage and decreases with the negative DC voltage, especially at higher voltage. Reference is made to the embodiment shown in Fig. 3. In this embodiment, substrate A and carrier layer T are preferably electrically conductive.

According to even further preferred embodiments, the adhesive tape of the present invention is a single-sided adhesive tape and has preferably only one layer of the adhesive containing no ionic liquid i.e., layer C of the adhesive on carrier layer T (backing) according to the embodiment shown in Fig. 2A. In this configuration, when the substrate A, which is disposed on a first face of the layer C of adhesive, is connected to the negative terminal of a DC voltage source and a positive terminal of the DC voltage source is connected to the carrier layer T, and when a voltage, preferably of 15 V to 50 V, is applied, the peel adhesion between the layer C of adhesive and substrate A is increased, thereby achieving bonding between the layer C of adhesive and substrate A. Now, reversing the connection of the DC voltage source (positive to A and negative to T), the peel adhesion between the layer C of adhesive and carrier layer T is increased, thereby achieving bonding between the layer C of adhesive and carrier layer T. For both cases, the peel adhesion increases with the negative DC voltage and stays constant with the positive DC voltage, especially at higher voltage. In this embodiment, substrate A and carrier layer T are preferably electrically conductive. Reference is made to the embodiment shown in Fig. 4.

According to other preferred embodiments, the adhesive tape of the present invention is a transfer adhesive tape and has preferably only one layer of the adhesive containing no ionic liquid i.e., layer C of the adhesive (no carrier layer T) according to the embodiment shown in Fig. 2B. In this configuration, one side of the layer C of adhesive is preferably further modified to reduce or remove stickiness or adhesion (making non-sticky or very weak sticky). The stickiness of the adhesive may be reduced or removed using any methods for reducing or removing the stickiness or adhesion of an adhesive known to a skilled person, for example by touching the adhesive multiple times with bare hands. The other face of the adhesive is then disposed on substrate A, which is connected to a positive terminal of a DC voltage source, more preferably with a voltage of 20 V to 100 V, and a negative terminal of the DC voltage source is connected to a conductive metal foil (e.g., a copper foil) as substrate B and when, bring closer to the non-sticky face of the layer C of adhesive, the adhesion between the layer C of adhesive and metal foil substrate B is increased or generated, thereby achieving a weak temporarily bonding between the layer C of adhesive and the metal foil, as long as voltage is applied. However, without the application of voltage, there is no bonding/adhesion between the layer C of adhesive and the metal foil substrate B. Reference is made to the embodiment shown in Fig. 9. In this embodiment, substrate A and metal foil B are preferably electrically conductive. This particular embodiment is particularly useful for achieving electroadhesion. This particular embodiment is also very useful for achieving weak temporary bonding, so-called "electroadhesion" and also debonding in robotics, preferably in the manufacturing of robotic gripping arms, especially when temporary bonding and debonding on demand is desired.

It is possible to produce adhesive tapes having two layers of adhesive of different kinds, with at least one of the layers being a layer of adhesive comprising the adhesive composition of the present invention. As described above, the adhesive layers may be directly adjacent (i.e., multi-layered or two-layered adhesive tape), or optionally there may also be one or more layers on the two adhesive layers, such as carrier layers or the like, for example (i.e., multi-layered single-sided adhesive tape).

According to further preferred embodiments, especially in the embodiments related to the above-mentioned multi-layered adhesive tape, the adhesive tape of the present invention is preferably a transfer adhesive tape and has multiple layers of the adhesives of the present invention, more preferably two layers of the adhesives of the present invention, even more preferably one layer containing one or more ionic liquids i.e., layer D of the adhesive, and the other layer containing no ionic liquids i.e., layer C of the adhesive, and particularly preferably the layer D is directly disposed on a face of the layer C of the adhesive without the presence of a carrier layer (i.e., carrier layer T) in between the layers D and C of adhesive according to the embodiment shown in Fig. 1E. Substrate B is disposed on the face of the layer D of adhesive; whereas, substrate A is disposed on the face of the layer C of adhesive. When a positive terminal of a DC voltage source is connected to the substrate B and a negative terminal is connected to the substrate A, and preferably wherein a higher voltage (e.g., 15 V to 50 V) is applied, the adhesive strength increases in the interface between substrate A and layer C of adhesive as well as the interface between substrate B and layer D of adhesive. On the contrary, when a negative terminal of the DC voltage source is connected to substrate B and a positive terminal of the DC voltage source is connected to substrate A, and wherein a higher voltage (e.g., 15 V to 50 V) is applied, the adhesive strength or the peel adhesion between the substrate B and the layer D of adhesive is decreased. Therefore, debonding or adhesive splitting between the substrate B and the layer D of adhesive occurs. However, the adhesive strength between the layer C of adhesive and substrate A does not change significantly. Reference is made to the embodiment shown in Fig. 6. In this embodiment, the substrates A and B are preferably electrically conductive.

According to further preferred embodiments, especially in the embodiments related to the above-mentioned single-sided, multi-layered (two-layered) adhesive tape construction, the adhesive tape of the present invention has preferably multiple layers of the adhesives of the present invention with the carrier layer T being disposed on one of the faces of the multiple adhesive layers. More preferably, the carrier layer T may be disposed on an outer face of two layers of the adhesives of the present invention. Even more preferably, one layer of the two layers contains one or more ionic liquids i.e., layer D of the adhesive, and the other layer contains no ionic liquids i.e., layer C of the adhesive, wherein the layer D is directly disposed on a face of the layer C of the adhesive as shown in Fig. 1D.

In the method for modifying the adhesive strength of the single-sided, multi-layered adhesive tape as shown in Fig. 1D by the method illustrated in present Fig. 8, Substrate A is disposed on the face of the layer D of adhesive; whereas, a carrier layer T is disposed on the face of the layer C of adhesive. The substrate A (e.g., a steel plate) is connected to the positive terminal of a DC voltage source; and the carrier layer T is connected to the negative terminal of a DC voltage source. This configuration results in increased peel adhesion between the layer D of adhesive and substrate A at a voltage of 15 to 50 V, thereby achieving bonding between the layer D of adhesive and the substrate A. The same increased peel adhesion is also observed between layer C of adhesive and the carrier layer T. However, to activate bonding, a higher voltage, such as 15 to 50 V, is a prerequisite. When the polarity is reversed, debonding can be achieved between the interface of substrate A and layer D of the adhesive. However, the layer C of adhesive and carrier layer T remain bonded. In this embodiment, the substrate A and carrier layer T are preferably electrically conductive.

According to other preferred embodiments, the adhesive tape of the present invention is a double-sided adhesive tape and has more than one layer of the adhesives of the present invention, preferably two layers of the adhesives of the present invention, more preferably one layer containing one or more ionic liquids i.e., layer D of the adhesive, and the other layer containing no ionic liquids i.e., layer C of the adhesive, and even more preferably the layers D and C of the adhesive are separated by a carrier layer T in the middle (between layers C and D of adhesive), preferably the carrier layer T is an electrically conductive carrier layer.

According to further preferred embodiments, especially in the embodiments related to the above-mentioned double-sided adhesive tape (e.g. layer D of adhesive - carrier layer T - layer C of adhesive; Fig. 1C), the substrate B (e.g., steel plate), which is disposed onto the layer D of adhesive, is connected to the positive terminal of a DC voltage source and the carrier layer T is connected to the negative terminal of a DC voltage source. In the above configuration, when a DC voltage (5-10V) is applied for a certain duration, the bonding strength increases between B and layer D of the adhesive. On the other side, substrate A disposed to layer C of adhesive, is connected to the negative terminal of a DC voltage source and the carrier layer T is connected to the positive side of the DC voltage course. In this configuration, when a DC voltage (15 to 50 V) is applied for a certain duration. The bonding strength between substrate A and layer C of adhesive increases. With the above-mentioned process, two metal substrates (A and B) can be strongly joined. On the contrary, when a negative terminal of the DC voltage source is connected to substrate B and a positive terminal to the carrier layer T, wherein a higher voltage is preferably applied (e.g., between 15 V to 50 V), then the adhesive strength between the substrate B and the layer D of adhesive is decreased. Therefore, debonding or adhesive splitting between the substrate B and the layer D of adhesive occurs. The opposite occurs when the connection of the DC voltage source is reversed. In particular, when a positive terminal of the DC voltage source is connected to the substrate B and a negative terminal of the DC voltage source is connected to the carrier layer T, the adhesive strength in an interface between the carrier layer T and the substrate B decreases, resulting in debonding or adhesive splitting between the carrier layer T and the layer D of adhesive. Reference is made to the embodiment shown in Fig. 6. In this embodiment, the substrate A, substrate B and carrier layer T are preferably electrically conductive.

The external, exposed faces of the layers D and/or C of adhesive (before applying to substrate B or A) on the adhesive tape of the present invention may advantageously be equipped with non-stick materials such as a release paper or a release film, also called liners. A liner may also comprise material with non-stick coating on at least one side, preferably both sides, such as double-sided siliconized material, for example. A liner or, formulated more generally, a temporary carrier is not part of an adhesive tape, but merely a means for its production, storage and/or further processing by die-cutting. Furthermore, unlike a permanent carrier, a liner is not fixedly joined to a layer of adhesive but instead functions as a temporary carrier, i.e., as a carrier which is removable from the layer of adhesive. In the present application, a "permanent carrier" is also, simply and synonymously, called "carrier" or "carrier layer".

### EXAMPLES

The present invention is illustrated below by a number of examples. The examples described below illustrate particularly advantageous versions of the present invention, without wishing thereby to subject the present invention to any unnecessary limitation.

### RAW MATERIALS

(a) Acrylate monomer (a1):
   - 2-(2-Ethoxyethoxy)ethyl acrylate (EEEA or EDGA)
(b) Acrylate monomer (a2):
   - N,N-Dimethylacrylamide (DMAA)
(c) Zwitterionic monomers
   - 2-(Methacryloyloxy)ethyl 2-(trimethylammonio)ethyl phosphate) (MPC) from TCI
   - 3-[[2-(Methacryloyloxy)ethyl]dimethylammonio]propionate (CBMA) from TCI
(d) Photoinitiators:
   - 2,2-Dimethoxy-2-phenylacetophenone (Irgacure 651) from Sigma-Aldrich
   - 1-Hydroxy-cyclohexyl-phenyl-ketone (Irgacure 184) from Sigma-Aldrich
(e) Ionic liquids
   - 1-Ethyl-3-methylimidazolium bis(fluorosulfonyl)imide (EMIM FSI) from proinic
   - 1-Butyl-1-methylpiperidinium bis(trifluoromethylsulfonyl)imide (BMPip TFSI) from lolitec
   - 1,3-Dimethylimidazolium bis(trifluoromethylsulfonyl)imide (DiMIM TFSI) from lolitec
   - Triethylsulfonium bis(trifluoromethylsulfonyl)imide (S222 TFSI) from lolitec
   - 1-Methyl-1-propylpyrrolidinium bis(fluorosulfonyl)imide (Pyr13 FSI) from TCI
   - 1-Ethyl-3-methylimidazolium bis(trifluoromethylsulfonyl)imide (EMIM TFSI) from proionic
   - 1-Ethyl-3-methylimidazolium hexafluorophosphate (EMIM PF₆) from Sigma-Aldrich
   - 1-Butyl-3-methylimidazolium hexafluorophosphate (BMIM PF₆) from Sigma-Aldrich
   - 1-Butyl-3-methylimidazolium bis(trifluoromethylsulfonyl)imide (BMIM TFSI) from lolitec
   - 1-Butyl-3-methylimidazoliumtetrafluoroborat (BMIM BF₄) from Sigma-Aldrich
(f) Conducting salts:
   - Lithium bis(trifluoromethylsulfonyl)imide (LiTFSI) from Sigma-Aldrich
   - Sodium chloride from Sigma-Aldrich
   - Lithium triflate (LiOTf, lithium triflouromethanesulfonate) from Sigma-Aldrich
   - Lithium tetrafluoroborate (LiBF₄) from Sigma-Aldrich
(g) Additional monomers (a3):
   - 4-Hydroxybutyl acrylate (4-HBA) from TCI
   - N-(2-hydroxyethyl) acrylamide from TCI
   - 2-Hydroxyethyl) acrylate from TCI
   - Acrylic acid from TCI
(h) Additives (plasticizers):
   - Water
   - Different types of PEGs (PEG 200, PEG 400 and similar kinds)
   - Different types of carbonates as ethylene carbonate (EC), vinylene carbonate (VC) and similar kinds

### EXPERIMENTAL EXAMPLE 1- UV POLYMERIZATION

Example 1 demonstrates the preparation of single-layered, single-sided adhesive tape or adhesive transfer tape of the invention by means of UV bulk polymerization. Disregarding solvents, the components used give a total of 100 wt %.

Different adhesive compositions of the invention (Examples 1 to 6) were produced with the successive steps of a) prepolymer preparation, i.e., UV syrup preparation; b) formulation of the liquid electrolyte, i.e., dissolving zwitterionic monomer, conducting salt, ionic liquid, photoinitiator and or other monomers or additives (plasticizer) into the UV syrup; and c) coating and curing of the liquid electrolyte between the aluminum PET carrier layer and a siliconized PET liner or between two siliconized PET liners. The curing process is related to the UV polymerization. See the details below for steps a) to c):

### Step a)

A mixture with a ratio 65:35 of EDGA:DMAA (monomer (a1):monomer (a2)) was prepared in a glass reactor. 0.0063 wt % of Irgacure 651 photoinitiator was added the mixture. Themixture was degassed under stirring with purging N₂ for 30 min and then irradiated by UV light at a wavelength of 365 nm with an intensity of 0.5 mW/cm². The mixture was kept under constant stirring and polymerization continued. The UV lamp was turned off when the reaction temperature in the glass reactor increased to 26 °C. The resulting UV syrup was allowed to cool down and kept away from light. The syrups obtained had a viscosity in the range of 4400 cP to 5500 cP with a refractive index in the range of 1.44 to 1.45.

### Step b)

80 to 90 wt % of the UV syrup from step a) was mixed with the other components as set out in Table 1 below, such as 1 to 5 wt % of zwitterionic monomer (MPC or CBMA), 1 to 10 wt % of conducting salt (NaCl or LiTFSI, or LiFSI or LiOTf), 0 to 10 wt % of one of the ionic liquid (EMIM FSI or BMIM TFSI or EMIM TFSI or EMIM BF₄ or BMIM BF₄ or S222 TFSI or BMPip TFSI) and 0.055 to 0.15 wt % of Irgacure 184 photoinitiator,0 to 10 wt % of other acrylate monomers (a3), such as 4-HBA and 1 to 5 wt % plasticizer (PEG 200) The mixture was then continuously rolled on a rolling bench until every component had dissolved. The mixtures are referred to as a liquid electrolyte when all components are dissolved.

### Step c)

The liquid electrolytes from step b) were coated with a layer thickness of about 100 to 150 µm between two films, e.g., an aluminium-PET film acting as a backing and a siliconized PET liner. When the liquid electrolyte is coated and cured between two siliconized liners to prepare an adhesive composition, and both liners are removed an adhesive transfer tape (not comprising carrier layer T) is provided. When the liquid electrolyte is coated on an aluminium-PET backing and covered by a siliconized PET liner and cured, then the siliconized PET liner is removed, a single-sided adhesive tape (comprising carrier layer T) is provided.

Curing was then achieved with irradiation from fluorescent lamps (ACTINIC) with wavelength of 350 to 400 nm (UV-A) at an intensity of ≈ 14 mW/cm² at the residence time in the irradiation tunnel being 200 to 358 seconds. This corresponds to a UV dose from 2800 to about 5000 mWs/cm². The following Table 1 shows the different adhesive compositions.

**Table 1: Adhesive compositions of Examples 1 to 6**

| Example | UV syrup | Liquid electrolyte | UV dose (mWs/cm²) |
|---|---|---|---|
| 1 | 65 wt % EDGA, | 89.87 wt % UV syrup, | |
| | 35 wt % DMAA, | 7.5 wt % LiTFSI, | 4200 |
| | 0.0063 wt % Irgacure 651 (added to mixture) | 2.5 wt % CBMA, | |
| | | 0.13 wt % Irgacure 184 | |
| 2 | 65 wt % EDGA, | 89.87 wt % UV syrup, | |
| | 35 wt % DMAA, | 7.5 wt % LiTFSI, | 4200 |
| | 0.0063 wt % Irgacure 651 (added to mixture) | 2.5 wt % MPC, | |
| | | 0.13 wt % Irgacure 184 | |
| 3 | 65 wt % EDGA, | 82.87 wt % UV syrup, | |
| | 35 wt % DMAA, | 7.5 wt % LiTFSI, | 4200 |
| | 0.0063 wt % Irgacure 651 (added to mixture) | 2.5 wt % MPC, | |
| | | 5 wt % BMPip TFSI, | |
| | | 2 wt % PEG 200, | |
| | | 0.13 wt % Irgacure 184 | |
| 4 | 65 wt % EDGA, | 82.87 wt % UV syrup, | |
| | 35 wt % DMAA, | 7.5 wt % LiTFSI, | 4200 |
| | 0.0063 wt % Irgacure 651 (added to mixture) | 2.5 wt % MPC, | |
| | | 5 wt % BMIM TFSI, | |
| | | 2 wt % PEG 200, | |
| | | 0.13 wt % Irgacure 184 | |
| 5 | 65 wt % EDGA, | 84.87 wt % UV syrup, | |
| | 35 wt % DMAA, | 7.5 wt % LiTFSI, | 4200 |
| | 0.0063 wt % Irgacure 651 (added to mixture) | 2.5 wt % MPC, | |
| | | 5 wt % BMIM TFSI, | |
| | | 0.13 wt % Irgacure 184 | |
| 6 | 65 wt % EDGA, | 84.87 wt % UV syrup, | |
| | 35 wt % DMAA, | 7.5 wt % LiTFSI, | 4200 |
| | 0.0063 wt % Irgacure 651 (added to mixture) | 2.5 wt % CBMA, | |
| | | 5 wt % EMIM FSI, | |
| | | 0.13 wt % Irgacure 184 | |

### TEST METHODS

Unless otherwise indicated, all measurements were conducted at 23 °C and 50 % relative humidity. Unless indicated otherwise, moreover, the measurements of the adhesive tape were carried out with an adhesive layer with a thickness of 100 µm to 150 µm.

### Test A: Peel Adhesion

A single-sided adhesive tape was cut with a width of 20 mm and a length of 150 mm. The adhesive tape was then laminated on a cleaned (using acetone after removing the protective film) ASTM steel plate upon removal of the siliconized PET liner. The other side of the adhesive tape was provided with an aluminium-PET backing or carrier layer. Then the whole setup was pressed by rolling back and forth over five times using a 4 kg roller.

The setup was then vertically hooked to the bottom holder of a tensile testing instrument (ZwickRoell Z020), and the aluminium-PET backing was attached to the upper holder of the instrument.

For peel adhesion measurement, the aluminium-PET backing was pulled off at an angle of 180° with a velocity of 300 mm/min. The maximum force was recorded in N/cm for a complete peel of the adhesive tape from the steel substrate. The values reported here are the average of three individual measurements.

The peel adhesion test was also conducted for a single-layered adhesive transfer tape, a multi-layered adhesive transfer tape and single-sided multi-layered adhesive tape. For the transfer tape or multi-layered transfer tape, the tape was laminated to an ASTM steel plate upon removal of the 1^{st} siliconized PET liner. Then, the other side of the tape was laminated to an aluminium-PET film after the removal of the 2^{nd} siliconized-PET liner. The rest of the procedure was followed as described for single-sided adhesive tape. The peel test of the single-sided multi-layered tape was also measured following the same procedure described for single-sided adhesive tape.

### Test B: Ionic Conductivity

The ionic conductivity, more specifically DC conductivity was measured by EIS (Electrochemical Impedance Spectroscopy) from the log-log plot of real part of the AC conductivity over an angular frequency by extrapolating the plateau region to the zero-frequency using the Dyre fit function. Measurements were done by a BioLogic VMP-300 in the mode of PElS (potentio EIS) with a constant voltage amplitude of 10 mV and a frequency range from 7 MHz to 1 Hz. A transfer tape (no carrier layer) of circular dimension with a diameter of 18 mm was applied between two circular steel plate electrodes. The tape thickness was 100 µm to 150 µm. The measuring temperature was 25 °C.

### EXPERIMENTAL EXAMPLE 2 - BONDING AND DEBONDING EXPERIMENT

A single-sided adhesive tape of 100 mm in length and 20 mm in width, was laminated to an ASTM steel plate (also referred to as substrate A or B above) by removing the siliconized PET release liner. The other side of the adhesive tape already has aluminium-PET as a backing or carrier layer. The entire setup was then pressed by rolling it over five times back and forth using a 4 kg roller. Different experiments were conducted at different voltages and polarities, as shown in Table 2 below, to understand the electrical tunable or adjustable bonding and debonding performance of adhesive tape.

For the bonding experiment (examples 1 and 2), the aluminium-PET backing of the adhesive (acting as the anode) was connected to the positive terminal of the DC voltage source, while the steel plate (acting as the cathode) was connected to the negative terminal of the DC voltage source. After that, a DC voltage in the range of 5 to 50 V, depending on the adhesive composition, was applied for 30 to 300 seconds. Then, the peel adhesion was measured according to test A. The bonding strength increase of the adhesive tape with respect to the ASTM steel plate was confirmed by an increase in peel adhesion values from its initial condition (without voltage application). The peel tests were also carried out on adhesive tape with different thicknesses.

For the bonding and debonding experiment (examples 3, 4, 5 and 6), the aluminium-PET backing of the adhesive (acting as the cathode) was connected to the negative terminal of the DC voltage source, while the steel plate (acting as the anode) was connected to the positive terminal of the DC voltage source. After that, a DC voltage in the range of 5 to 10 V, depending on the adhesive composition, was applied for 30 to 300 seconds. Then, the peel adhesion was measured according to test A. The bonding strength increase of the adhesive tape with respect to the ASTM steel plate was confirmed by an increase in peel adhesion value from its initial condition (no voltage applied). When the connection of the DC voltage source was reversed (steel to negative and positive to aluminium-PET) and 15 to 50 V was applied and then the peel adhesion was measured according to test A. The bonding strength of the adhesive tape with respect to the ASTM steel plate from its initial value decreased up to 70 to 95 %, confirming debonding of the adhesive tape from the ASTM steel plate.

Also, another experiment on the dynamic control of the bonding strength (e.g., bonding-debonding) in the same tape was conducted (examples 4 and 5, marked with * in Table 2) in two steps. Sample preparation followed the procedure described in test A. A single-sided adhesive tape was laminated onto a steel plate. Then, a positive DC voltage of 5 to 10 V was applied to the steel plate for 1 min to initially increase the bonding strength (1^{st} step). Next, in the same sample, a negative DC voltage of 15 to 50 V was applied for 1 min (polarity reversed) (2^{nd} step). Finally, a peel adhesion test was performed by test A to confirm the decrease in bonding strength from the 1^{st} step (e.g., increased bonding strength state).

Bonding experiment for the adhesive transfer tape: first, the 1^{st} siliconized PET liner was removed, and the adhesive tape was applied to the ASTM steel plate. Then, the 2^{nd} siliconized PET liner was removed, and an aluminium-PET film was laminated on the adhesive tape. To measure peel adhesion, same procedure was followed as described for the single-sided adhesive tape. However, during peel test, sometimes, the aluminium-PET film comes off the adhesive surface. In such cases, an etched PET film needs to be applied to the adhesive surface to complete the peel test.

**Table 2: Results for single-sided adhesive tapes of Examples 1 to 6**

| Examples | Peel adhesion (N/cm) | | Thickness (µm) | Ion conductivity (S/cm) |
|---|---|---|---|---|
| 1 | No Voltage | 2 | 100 | ~10⁻⁸ |
| | 15 V (1 min) | 9.5 | 100 | |
| | No Voltage | 4.2 | 150 | |
| | 15 V (1 min) | 10.5 | 150 | |
| 2 | No Voltage | 2.5 | 100 | ~10⁻⁸ |
| | 15 V (1 min) | 10.5 | 100 | |
| | No Voltage | 5.0 | 150 | |
| | 15 V (1 min) | 10 | 150 | |
| 3 | No Voltage | 2.7 | 100 | ~10⁻⁷ |
| | 6 V (1 min) | 6.2 | 100 | |
| | 15 V (1 min) (Reversed Polarity) | 0.63 | 100 | |
| 4 | No Voltage | 3.4 | 100 | ~10⁻⁷ |
| | 6 V (1 min) | 6.4 | 100 | |
| | 15 V (1 min) (Reversed Polarity) | 0.8 | 100 | |
| | 6 V (1 min) then 15 V (1 min)* | 6.4 to 0.8 | 100 | |
| 5 | No Voltage | 2.5 | 100 | ~10⁻⁸ |
| | 6V (1 min) | 9.2 | 100 | |
| | 25 V (1 min) (Reversed Polarity) | 2.6 | 100 | |
| | 6 V (1 min) then 25 V (1 min)* | 9.2 to 2.6 | 100 | |
| 6 | No Voltage | 6.3 | 150 | ~10⁻⁷ |
| | 6 V (1 min) | 9.7 | 150 | |
| | 15 V (1 min) (Reversed Polarity) | 0.25 | 150 | |

### EMBODIMENTS

In a first embodiment, the present invention relates to an adhesive composition, prepared by polymerizing a mixture comprising at least the following components:
a) 35 to 70 wt % of acrylate monomer (a1) from the group of (meth)acrylic esters containing at least one oxygen atom; and
b) 20 to 40 wt % of acrylate monomer (a2) from the group of (meth)acrylic esters and/or amides containing at least one nitrogen atom; and
c) 0.1 wt % to 15 wt % of one or more electro-responsive compounds from the group of polymerizable zwitterionic monomers and/or non-polymerizable zwitterionic compounds, preferably one or more zwitterionic monomers; and
d) 0.005 to 10 wt % of at least one initiator; and
e) 0 wt % to 20 wt % of one or more ionic liquids; and
f) 0.1 wt % to 20 wt % of one or more conducting salts; and
g) optionally 1 wt % to 20 wt % by weight of one or more acrylate monomers (a3), wherein the one or more acrylate monomers (a3) are different from acrylate monomers (a1) and (a2); and
h) optionally additives,
wherein the weight fractions of the components are based on the total weight of the mixture.

In a second embodiment, the at least one initiator of the adhesive composition of the first embodiment is a thermal initiator and/or a photoinitiator, preferably at least one photoinitiator.

In a third embodiment, the polymerization of the adhesive composition of the first or second embodiment is a UV polymerization.

In a fourth embodiment, the mixture forming the basis for the adhesive composition of any one of the first to third embodiment further comprises additives selected from the group consisting of crosslinker, salt of acrylate, plasticizer, antioxidant, tackifier, corrosion inhibitor, oxygen scavenger, water, and a combination thereof, preferably in an amount of 0.01 wt % to 10 wt %, based on the total weight of the adhesive composition.

In a fifth embodiment, the anion of the one or more ionic liquids of the adhesive composition of the first to fourth embodiment is selected from the group consisting of Cl⁻, Br⁻. I⁻, BF₄⁻, -OAc, CN⁻, SCN⁻, CF₃SO₃⁻, [(CF₃SO₂)₂N]⁻, [(FSO₂)₂N]⁻, C(CN)₃⁻, CH₃CH₂OSO₃⁻, PF₆⁻, CH₃OSO₃⁻, CH₃C₆H₄SO₂⁻, N(CN)₂⁻, HSO₄⁻, CH₃SO₃⁻, (C₄H₉O)₂PO₂⁻, (C₂H₅O)₂PO₂⁻, NO₃⁻, CF₃CF₂SO₃⁻, C₄F₉SO₃⁻, CH₃OCO₂⁻, C₆H₁₄N₂O₂⁻, C₂H₅COO⁻, C₇H₇SO₃⁻, CF₃COO⁻, FeCl₄⁻, SbF₆⁻, AlCl₄⁻, and GaCl₄⁻.

In a sixth embodiment, the cation of the one or more ionic liquids of the adhesive composition of the first to fifth embodiment is selected from the group consisting of imidazolium-based cations, pyridinium-based cations, pyrrolidinium-based cations, piperidinium-based cations, phosphonium-based cations, sulfonium-based cations, morpholinium-based cations, ammonium-based cations, and a combination thereof.

In a seventh embodiment, the mixture forming the basis for the adhesive composition of any one of the first to sixth embodiment comprises one or more electro-responsive zwitterionic monomers and/or one or more non-polymerizable zwitterionic compounds based on phosphobetaine, carboxybetaine, sulfobetaine, or combinations thereof.

In an eighth embodiment, the conducting salt of the adhesive composition of the first to seventh embodiment is selected from salts having cations comprising Li⁺, Na⁺, K⁺, Cs⁺, Rb⁺, Ag⁺, Cu⁺, Cu²⁺, Mg²⁺, NH₄⁺, or combinations thereof; and/or salts having anions comprising Cl⁻, Br⁻, I⁻, ClO₄⁻, OH⁻, SCN⁻, AsF₆⁻, [(CF₃SO₂)₂N]⁻, [(FSO₂)₂N]⁻, CF₃SO₃⁻, CH₃CO₂⁻, [B(C₂O₄)₂]⁻, [BF₂(C₂O₄)₂]⁻, PF₆⁻, BF₄⁻, [PF₃(CF₂CF₃)_{3]'}, C₂O₄²⁻, C(CF₃SO₂)₃⁻, or combinations thereof.

In a ninth embodiment, the weight ratio of monomer (a1) to monomer (a2) in the mixture forming the basis for the adhesive composition of any one of the first to eighth embodiment is in a ratio between 80:20 to 50:50, based on the total weight of monomer (a1) and monomer (a2).

In a tenth embodiment, the present invention relates to an adhesive tape comprising at least layers as follows:
(a) a first layer D of adhesive, the layer D of adhesive containing the adhesive composition of any one of the first to ninth embodiment, wherein the adhesive composition contains one or more ionic liquids; and
(b) optionally a carrier layer T, preferably wherein the carrier layer T is electrically conductive; and
(c) optionally a second layer C of adhesive, the layer C of adhesive containing the adhesive composition of any one of the first to ninth embodiment, wherein the adhesive composition contains no ionic liquid.

In an eleventh embodiment, the present invention relates to an adhesive tape comprising at least layers as follows:
(a) a layer C of adhesive, the layer C of adhesive containing the adhesive composition of any one of the first to ninth embodiment, wherein the adhesive composition contains no ionic liquid; and
(b) optionally a carrier layer T, preferably wherein the carrier layer T is electrically conductive.

In a twelfth embodiment, the adhesive tape of the tenth embodiment further comprises the carrier layer T, wherein the layer D of adhesive is disposed at least on one of the faces of the carrier layer T, and preferably wherein the adhesive tape contains no second layer C of adhesive.

In a thirteenth embodiment, the adhesive tape of the tenth embodiment further comprises the carrier layer T and the second layer C of adhesive, and wherein the carrier layer T is disposed between the first layer D of adhesive and the second layer C of adhesive.

In a fourteenth embodiment, the adhesive tape of the tenth embodiment further comprises the second layer C of adhesive, wherein the layer D of adhesive is disposed at least on one of the faces of the second layer C of adhesive, and preferably wherein the adhesive tape contains no carrier layer T.

In a fifteenth embodiment, the adhesive tape of the tenth embodiment further comprises the carrier layer T and the second layer C of adhesive, and wherein the layer D of adhesive is disposed on one of the faces of the layer C of adhesive and the layer T is disposed on the other face of layer C of adhesive.

In a sixteenth embodiment, the adhesive tape of the eleventh embodiment further comprises the carrier layer T, wherein the layer C of adhesive is disposed at least on one of the faces of the carrier layer T.

In a seventeenth embodiment, the adhesive tape of any one of the tenth, eleventh or fourteenth embodiment is an optically clear adhesive tape.

In an eighteenth embodiment, the adhesive tape of any one of the tenth to sixteenth embodiment is configured to have an electrically modifiable adhesive strength by the application of DC voltage, thereby achieving bonding, electroadhesion, rebonding, bond recovery, and debonding functions, preferably, the adhesive strength is modified by adjusting a time of voltage application, a polarity of voltage and/or a level of voltage.

In a nineteenth embodiment, the adhesive tape of any one of the tenth to sixteenth embodiment is an adhesive transfer tape, preferably a single-layered adhesive transfer tape, or a multi-layered adhesive transfer tape; or a single-sided, single-layer adhesive tape; or a double-sided, single-layer adhesive tape; or a single-sided, multi-layered adhesive tape.

In a twentieth embodiment, the present invention relates to a method for modifying the adhesive strength of the adhesive tape of the twelfth embodiment, comprising at least steps as follows:
a) connecting a direct-current (DC) voltage source to a substrate A, preferably being electrically conductive, and to the carrier layer T, the substrate A being disposed on a first face of the layer D of adhesive having the carrier layer T being disposed on a second face of the layer D of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
   thereby weakening the adhesive strength in an interface between the layer D of adhesive and the substrate A; and/or
c) applying a voltage of 5 to 50 V, preferably 5 to 10 V, when a positive terminal of the DC voltage source is connected to the substrate A and a negative terminal of the DC voltage source is connected to the carrier layer T,
   thereby increasing the adhesive strength in an interface between the layer D of adhesive and the substrate A; or
d) applying a voltage according to step c), followed by applying a voltage according to step b); and optionally followed by applying a voltage according to step c), or followed by repeating the sequence of steps c) and b) in this order at least one time.

In a twenty-first embodiment, the present invention relates to a method for modifying the adhesive strength of the adhesive tape of the sixteenth embodiment, comprising at least steps as follows:
a) connecting a direct-current (DC) voltage source to a substrate A, preferably being electrically conductive, and to the carrier layer T, the substrate A being disposed on a first face of the layer C of adhesive having carrier layer T being disposed on a second face of the layer C of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
   thereby increasing the adhesive strength in an interface between the layer C of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the carrier layer T,
   thereby increasing the adhesive strength in an interface between the layer C of adhesive and the carrier layer T.

In a twenty-second embodiment, the present invention relates to a method for modifying the adhesive strength of the adhesive tape of the tenth embodiment, only comprising the first layer D of adhesive, the method comprising at least steps as follows:
a) connecting a direct-current (DC) voltage source to a substrate A, preferably being electrically conductive, and to a substrate B, preferably being electrically conductive, the substrate A being disposed on a first face of the layer D of adhesive and the substrate B being disposed on a second face of the layer D of adhesive; and
b) applying a voltage of 5 to 50 V, preferably 15 to 50 V, when a negative terminal of the DC voltage source is connected to the substrate A and a positive terminal of the DC voltage source is connected to the substrate B,
   thereby weakening the adhesive strength in an interface between the layer D of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the substrate B,
   thereby weakening the adhesive strength in an interface between the layer D of adhesive and the substrate B; and/or
d) applying a voltage of 5 to 50 V, preferably 5 to 10 V, when a negative terminal of the DC voltage source is connected to the substrate A and a positive terminal of the DC voltage source is connected to the substrate B,
   thereby increasing the adhesive strength in an interface between the layer D of adhesive and the substrate B; and/or
e) applying a voltage of 5 to 50 V, preferably 5 to 10 V, when a positive terminal of the DC voltage source is connected to the substrate A and a negative terminal of the DC voltage source is connected to the substrate B,
   thereby increasing the adhesive strength in an interface between the layer D of adhesive and the substrate A; or
f) applying a voltage according to step d), followed by applying a voltage according to step c); and optionally followed by applying a voltage according to step d), or followed by repeating the sequence of steps d) and c) in this order at least one time; or
g) applying a voltage according to step e), followed by applying a voltage according to step b); and optionally followed by applying a voltage according to step e), or followed by repeating the sequence of steps e) and b) in this order at least one time.

In a twenty-third embodiment, the present invention relates to a method for modifying the adhesive strength of the adhesive tape of the thirteenth embodiment, comprising at least steps as follows:
a) connecting a direct-current (DC) voltage source to the carrier layer T, and to a substrate B, preferably being electrically conductive, the substrate B being disposed on the outer face of the layer D of adhesive; and
b) applying a voltage of 5 to 50 V, preferably 15 to 50 V, when a negative terminal of the DC voltage source is connected to the substrate B and a positive terminal of the DC voltage source is connected to the carrier layer T,
   thereby weakening the adhesive strength in an interface between the layer D of adhesive and the substrate B; and/or
c) applying a voltage of 5 to 50 V, preferably 15 to 50 V, when a positive terminal of the DC voltage source is connected to the substrate B and a negative terminal of the DC voltage source is connected to the carrier layer T,
   thereby weakening the adhesive strength in an interface between the layer D of adhesive and the carrier layer T; and/or
d) applying a voltage of 5 to 50 V, preferably 5 to 10 V, when a positive terminal of the DC voltage source is connected to the substrate B and a negative terminal of the DC voltage source is connected to the carrier layer T,
   thereby increasing the adhesive strength in an interface between the layer D of adhesive and the substrate B; or
e) applying a voltage according to step d), followed by applying a voltage according to step b).

In a twenty-fourth embodiment, the present invention relates to a method for modifying the adhesive strength of the adhesive tape of the thirteenth embodiment, comprising at least steps as follows:
a') connecting a direct-current (DC) voltage source to the carrier layer T, and to a substrate A, preferably being electrically conductive, the substrate A being disposed on the outer face of the layer C of adhesive; and
f) connecting the negative terminal of the DC voltage source to the substrate A and a positive terminal of the DC voltage source to the carrier layerT and applying a voltage of 5 to 50 V,
   thereby increasing the adhesive strength in an interface between the layer C of adhesive and the substrate A; or
g) applying a voltage according to step d) of the twenty-third embodiment, and applying a voltage according to step f).

In a twenty-fifth embodiment, the present invention relates to a method for modifying the adhesive strength of the adhesive tape of the fourteenth embodiment, comprising at least steps as follows:
a) connecting a direct-current (DC) voltage source to a substrate A, preferably being electrically conductive, and to a substrate B, preferably being electrically conductive, the substrate B being disposed on the outer face of the layer D of adhesive, and the substrate A being disposed on the outer face of the layer C of adhesive; and
b) applying a voltage of 5 to 50 V, preferably 15 to 50 V, when a negative terminal of the DC voltage source is connected to the substrate B and a positive terminal of the DC voltage source is connected to the substrate A,
   thereby weakening the adhesive strength in an interface between the layer D of adhesive and the substrate B; and/or
c) applying a voltage of 5 to 50 V, preferably 15 to 50 V, when a positive terminal of the DC voltage source is connected to the substrate B and a negative terminal of the DC voltage source is connected to the substrate A,
   thereby increasing the adhesive strength in an interface between the layer D of adhesive and the substrate B, and also increasing the adhesive strength in an interface between the layer C of adhesive and the substrate A; or
d) applying a voltage according to step c), followed by applying a voltage according to step b); and optionally followed by applying a voltage according to step c), or followed by repeating the sequence of steps c) and b) in this order at least one time.

In a twenty-sixth embodiment, the present invention relates to a method for modifying the adhesive strength of the adhesive tape of the fifteenth embodiment, comprising at least steps as follows:
a) connecting a direct-current (DC) voltage source to the carrier layer T, and to a substrate A, preferably being electrically conductive, the substrate A being disposed on the outer face of the layer D of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
   thereby weakening the adhesive strength in an interface between the layer D of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the carrier layer T,
   thereby increasing the adhesive strength in an interface between the layer D of adhesive and the substrate A; or
d) applying a voltage according to step c), followed by applying a voltage according to step b); and optionally followed by applying a voltage according to step c), or followed by repeating the sequence of steps c) and b) in this order at least one time.

In a twenty-seventh embodiment, the present invention relates to a method for inducing electroadhesion to the adhesive tape of the eleventh embodiment, the method comprising steps as follows:
a) connecting a direct-current (DC) voltage source to a substrate A, preferably being electrically conductive, and to a substrate B, the substrate A being disposed on a first face of the layer C of adhesive and the substrate B not being in contact with a second face of the layer C of adhesive; and
b) applying a voltage of preferably 20 to 100 V when a positive terminal of the DC voltage source is connected to the substrate A and a negative terminal of the DC voltage source is connected to the substrate B,
   thereby inducing electroadhesion in an interface between the layer C of adhesive and the substrate B, when the substrate B is brought closer to the second face of the layer C of adhesive and for as long as voltage is maintained.

In a twenty-eighth embodiment, the present invention relates to a use of the adhesive tape of any one of the tenth to nineteenth embodiment for bonding, electroadhesion, rebonding and debonding in: (i) different metal surfaces or substrates coated with conductive materials; (ii) robotics, preferably in the manufacturing of robotic gripping arm; (iii) haptic devices; (iv) debonding applications; (v) sealing applications; (vi) applications where high bonding strength or debonding is needed without application of heat, light or pressure; (vii) sensing applications; (viii) consumer electronics; (ix) electronic packaging; (x) semi-structural bonding applications; (xi) microelectronics; (xii) battery mounting for EVs or cell phones with reusable functions; (xiii) cell phone back cover mounting, (xiv) biomedical applications; (xv) recycling applications (e.g., disassembly and reassembly of products); (xvi) microfabrication (e.g., transfer and positioning of small components); (xvii) environmental and structural adaptability (adaptability to surface conditions or structural changes); (xviii) application in smart wearable electronics (e.g., health monitoring); and (xix) optoelectronics (e.g., bonding camera modules).

## Claims

1. An adhesive composition, prepared by polymerizing a mixture comprising at least the following components:
a) 35 to 70 wt % of acrylate monomer (a1) from the group of (meth)acrylic esters containing at least one oxygen atom; and
b) 20 to 40 wt % of acrylate monomer (a2) from the group of (meth)acrylic esters and/or amides containing at least one nitrogen atom; and
c) 0.1 wt % to 15 wt % of one or more electro-responsive compounds from the group of polymerizable zwitterionic monomers and/or non-polymerizable zwitterionic compounds, preferably one or more zwitterionic monomers; and
d) 0.005 to 10 wt % of at least one initiator; and
e) 0 wt % to 20 wt % of one or more ionic liquids; and
f) 0.1 wt % to 20 wt % of one or more conducting salts; and
g) optionally 1 wt % to 20 wt % by weight of one or more acrylate monomers (a3), wherein the one or more acrylate monomers (a3) are different from acrylate monomers (a1) and (a2); and
h) optionally additives,
wherein the weight fractions of the components are based on the total weight of the mixture.

2. The adhesive composition of claim 1, wherein the weight ratio of monomer (a1) to monomer (a2) in the mixture is in a ratio between 80:20 to 50:50, based on the total weight of monomer (a1) and monomer (a2).

3. An adhesive tape comprising at least layers as follows:
(a) a first layer D of adhesive, the layer D of adhesive containing the adhesive composition of any one of claims 1 or 2, wherein the adhesive composition contains one or more ionic liquids; and
(b) optionally a carrier layer T, preferably wherein the carrier layer T is electrically conductive; and
(c) optionally a second layer C of adhesive, the layer C of adhesive containing the adhesive composition of any one of claims 1 to 2, wherein the adhesive composition contains no ionic liquid.

4. An adhesive tape comprising at least layers as follows:
(a) a layer C of adhesive, the layer C of adhesive containing the adhesive composition of any one of claims 1 to 2, wherein the adhesive composition contains no ionic liquid; and
(b) optionally a carrier layer T, preferably wherein the carrier layer T is electrically conductive.

5. A method for modifying the adhesive strength of the adhesive tape of claim 3, comprising at least steps as follows:
a) connecting a direct-current (DC) voltage source to a substrate A, preferably being electrically conductive, and to the carrier layer T, the substrate A being disposed on a first face of the layer D of adhesive having the carrier layer T being disposed on a second face of the layer D of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
thereby weakening the adhesive strength in an interface between the layer D of adhesive and the substrate A; and/or
c) applying a voltage of 5 to 50 V, preferably 5 to 10 V, when a positive terminal of the DC voltage source is connected to the substrate A and a negative terminal of the DC voltage source is connected to the carrier layer T,
thereby increasing the adhesive strength in an interface between the layer D of adhesive and the substrate A; or
d) applying a voltage according to step c), followed by applying a voltage according to step b); and optionally followed by applying a voltage according to step c), or followed by repeating the sequence of steps c) and b) in this order at least one time.

6. A method for modifying the adhesive strength of the adhesive tape of claim 4, comprising at least steps as follows:
a) connecting a direct-current (DC) voltage source to a substrate A, preferably being electrically conductive, and to the carrier layer T, the substrate A being disposed on a first face of the layer C of adhesive having carrier layer T being disposed on a second face of the layer C of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
thereby increasing the adhesive strength in an interface between the layer C of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the carrier layer T,
thereby increasing the adhesive strength in an interface between the layer C of adhesive and the carrier layer T.

7. A method for modifying the adhesive strength of the adhesive tape of claim 3, only comprising the first layer D of adhesive, the method comprising at least steps as follows:
a) connecting a direct-current (DC) voltage source to a substrate A, preferably being electrically conductive, and to a substrate B, preferably being electrically conductive, the substrate A being disposed on a first face of the layer D of adhesive and the substrate B being disposed on a second face of the layer D of adhesive; and
b) applying a voltage of 5 to 50 V, preferably 15 to 50 V, when a negative terminal of the DC voltage source is connected to the substrate A and a positive terminal of the DC voltage source is connected to the substrate B,
thereby weakening the adhesive strength in an interface between the layer D of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the substrate B,
thereby weakening the adhesive strength in an interface between the layer D of adhesive and the substrate B; and/or
d) applying a voltage of 5 to 50 V, preferably 5 to 10 V, when a negative terminal of the DC voltage source is connected to the substrate A and a positive terminal of the DC voltage source is connected to the substrate B,
thereby increasing the adhesive strength in an interface between the layer D of adhesive and the substrate B; and/or
e) applying a voltage of 5 to 50 V, preferably 5 to 10 V, when a positive terminal of the DC voltage source is connected to the substrate A and a negative terminal of the DC voltage source is connected to the substrate B,
thereby increasing the adhesive strength in an interface between the layer D of adhesive and the substrate A; or
f) applying a voltage according to step d), followed by applying a voltage according to step c); and optionally followed by applying a voltage according to step d), or followed by repeating the sequence of steps d) and c) in this order at least one time; or
g) applying a voltage according to step e), followed by applying a voltage according to step b); and optionally followed by applying a voltage according to step e), or followed by repeating the sequence of steps e) and b) in this order at least one time.

8. A method for modifying the adhesive strength of the adhesive tape of claim 3, comprising at least steps as follows:
a) connecting a direct-current (DC) voltage source to the carrier layer T, and to a substrate B, preferably being electrically conductive, the substrate B being disposed on the outer face of the layer D of adhesive; and
b) applying a voltage of 5 to 50 V, preferably 15 to 50 V, when a negative terminal of the DC voltage source is connected to the substrate B and a positive terminal of the DC voltage source is connected to the carrier layer T,
thereby weakening the adhesive strength in an interface between the layer D of adhesive and the substrate B; and/or
c) applying a voltage of 5 to 50 V, preferably 15 to 50 V, when a positive terminal of the DC voltage source is connected to the substrate B and a negative terminal of the DC voltage source is connected to the carrier layer T,
thereby weakening the adhesive strength in an interface between the layer D of adhesive and the carrier layer T; and/or
d) applying a voltage of 5 to 50 V, preferably 5 to 10 V, when a positive terminal of the DC voltage source is connected to the substrate B and a negative terminal of the DC voltage source is connected to the carrier layer T,
thereby increasing the adhesive strength in an interface between the layer D of adhesive and the substrate B; or
e) applying a voltage according to step d), followed by applying a voltage according to step b).

9. A method for modifying the adhesive strength of the adhesive tape of claim 3, comprising at least steps as follows:
a') connecting a direct-current (DC) voltage source to the carrier layer T, and to a substrate A, preferably being electrically conductive, the substrate A being disposed on the outer face of the layer C of adhesive; and
f) connecting the negative terminal of the DC voltage source to the substrate A and a positive terminal of the DC voltage source to the carrier layer T and applying a voltage of 5 to 50 V,
thereby increasing the adhesive strength in an interface between the layer C of adhesive and the substrate A; or
g) applying a voltage according to step d) of claim 3, and applying a voltage according to step f).

10. A method for modifying the adhesive strength of the adhesive tape of claim 3, comprising at least steps as follows:
a) connecting a direct-current (DC) voltage source to a substrate A, preferably being electrically conductive, and to a substrate B, preferably being electrically conductive, the substrate B being disposed on the outer face of the layer D of adhesive, and the substrate A being disposed on the outer face of the layer C of adhesive; and
b) applying a voltage of 5 to 50 V, preferably 15 to 50 V, when a negative terminal of the DC voltage source is connected to the substrate B and a positive terminal of the DC voltage source is connected to the substrate A,
thereby weakening the adhesive strength in an interface between the layer D of adhesive and the substrate B; and/or
c) applying a voltage of 5 to 50 V, preferably 15 to 50 V, when a positive terminal of the DC voltage source is connected to the substrate B and a negative terminal of the DC voltage source is connected to the substrate A,
thereby increasing the adhesive strength in an interface between the layer D of adhesive and the substrate B, and also increasing the adhesive strength in an interface between the layer C of adhesive and the substrate A; or
d) applying a voltage according to step c), followed by applying a voltage according to step b); and optionally followed by applying a voltage according to step c), or followed by repeating the sequence of steps c) and b) in this order at least one time.

11. A method for modifying the adhesive strength of the adhesive tape of claim 3, comprising at least steps as follows:
b) connecting a direct-current (DC) voltage source to the carrier layer T, and to a substrate A, preferably being electrically conductive, the substrate A being disposed on the outer face of the layer D of adhesive; and
b) applying a voltage of 5 to 50 V, preferably 15 to 50 V, when a negative terminal of the DC voltage source is connected to the substrate A and a positive terminal of the DC voltage source is connected to the carrier layer T,
thereby weakening the adhesive strength in an interface between the layer D of adhesive and the substrate A; and/or
c) applying a voltage of 5 to 50 V, preferably 15 to 50 V, when a positive terminal of the DC voltage source is connected to the substrate A and a negative terminal of the DC voltage source is connected to the carrier layer T,
thereby increasing the adhesive strength in an interface between the layer D of adhesive and the substrate A; or
d) applying a voltage according to step c), followed by applying a voltage according to step b); and optionally followed by applying a voltage according to step c), or followed by repeating the sequence of steps c) and b) in this order at least one time.

12. A method for inducing electroadhesion to the adhesive transfer tape of claim 4, only comprising the second layer C of adhesive, the method comprising steps as follows:
a) connecting a direct-current (DC) voltage source to a substrate A, preferably being electrically conductive, and to a substrate B, the substrate A being disposed on a first face of the layer C of adhesive and the substrate B not being in contact with a second face of the layer C of adhesive; and
b) applying a voltage of preferably 20 to 100 V when a positive terminal of the DC voltage source is connected to the substrate A and a negative terminal of the DC voltage source is connected to the substrate B,
thereby inducing electroadhesion in an interface between the layer C of adhesive and the substrate B, when the substrate B is brought closer to the second face of the layer C of adhesive and for as long as voltage is maintained.

13. A use of the adhesive tape as claimed in any one of claims 3 or 4 for bonding, electroadhesion, rebonding and debonding in: (i) different metal surfaces or substrates coated with conductive materials; (ii) robotics, preferably in the manufacturing of robotic gripping arm; (iii) haptic devices; (iv) debonding applications; (v) sealing applications; (vi) applications where high bonding strength or debonding is needed without application of heat, light or pressure; (vii) sensing applications; (viii) consumer electronics; (ix) electronic packaging; (x) semi-structural bonding applications; (xi) microelectronics; (xii) battery mounting for EVs or cell phones with reusable functions; (xiii) cell phone back cover mounting, (xiv) biomedical applications; (xv) recycling applications (e.g., disassembly and reassembly of products); (xvi) microfabrication (e.g., transfer and positioning of small components); (xvii) environmental and structural adaptability (adaptability to surface conditions or structural changes); (xviii) application in smart wearable electronics (e.g., health monitoring); and (xix) optoelectronics (e.g., bonding camera modules).
